# EUROPEAN PATENT SPECIFICATION

(11) **EP 0 535 672 B1**
(45) Date of publication and mention of the grant of the patent: **03.01.2001**
(21) Application number: 92116822.5
(22) Date of filing: 01.10.1992
(51) Int. Cl.: G03G 5/06

(54) **Electrophotographic photoreceptor**
Elektrophotographischer Photorezeptor
Photorécepteur électrophotographique

(30) Priority: 02.10.1991 JP 25534291; 08.10.1991 JP 26086591; 22.10.1991 JP 27427791
(43) Date of publication of application: 07.04.1993
(73) Proprietor: MITSUBISHI CHEMICAL CORPORATION, Chiyoda-ku Tokyo (JP)
(72) Inventor: Ono, Hitoshi, Yokohama-shi, Kanagawa-ken (JP); Saita, Atsuo, Machida-shi, Tokyo (JP)
(74) Representative: Wächtershäuser, Günter, Prof. Dr.

(56) References cited:
- EP-A- 0 337 307
- FR-A- 2 375 632
- GB-A- 2 092 320
- PATENT ABSTRACTS OF JAPAN vol. 14, no. 44 (P-996)(3987) 26 January 1990 & JP-A-1 274 154 ( KONICA ) 1 November 1989
- PATENT ABSTRACTS OF JAPAN vol. 7, no. 6 (P-167)(1151) 11 January 1983 & JP-A-57 165 841 ( ASAHI GLASS ) 13 October 1982
- PATENT ABSTRACTS OF JAPAN vol. 11, no. 349 (C-456)(2796) 14 November 1987 & JP-A-62 120 346 ( MINOLTA ) 1 June 1987
- PATENT ABSTRACTS OF JAPAN vol. 9, no. 299 (P-408)(2022) 27 November 1985 & JP-A-60 135 952 ( MITSUBISHI ) 19 July 1985
- PATENT ABSTRACTS OF JAPAN vol. 9, no. 26 (P-332)(1749) 5 February 1985 & JP-A-59 170 843 ( CANON ) 27 September 1984

## Description

The present invention relates to an electrophotographic photoreceptor. More particularly, it relates to a highly sensitive electrophotographic photoreceptor having a photosensitive layer containing an organic photoconductive material.

Heretofore, inorganic photoconductive substances such as selenium, cadmium sulfide and zinc oxide have been widely used for photosensitive layers of electrophotographic photoreceptors. However, selenium and cadmium sulfide are required to be recovered as poisonous substances, and selenium tends to be crystallized by heat and thus is poor in the heat resistance. Cadmium sulfide and zinc oxide are poor in moisture resistance, and zinc oxide lacks in printing resistance. Therefore, efforts have been made for the development of a new photoreceptor. Recently, a research for the use of organic photoconductive materials for photosensitive layers of electrophotographic photoreceptors has found some progress, and some of them have been practically employed. As compared with inorganic materials, the organic photoconductive materials have advantages such that they are light in weight, they can easily be formed into films, preparation of photoreceptors is thereby easy, and transparent photoreceptors can be produced depending upon their types.

Recently, so-called function-separated photoreceptors wherein functions to generate electric charge carriers and to transport the generated carriers are performed by separate compounds, have been the main objects for development, since such function-separated photoreceptors are effective for high sensitivity, and organic photoreceptors of this type have been practically developed.

As a medium for transporting electric charge carriers, it is possible to employ a polymer photoconductive compound such as polyvinyl carbazole. Otherwise, it is possible to employ a low molecular weight photoconductive compound by dispersing and dissolving such a compound in a binder polymer. It is particularly convenient to use an organic low molecular weight photoconductive compound, since it is thereby possible to select as the binder a polymer excellent in the film-forming properties, the flexibility and the adhesive properties, and it is readily possible to obtain a photoreceptor excellent in the mechanical properties (see e.g. Japanese Unexamined Patent Publications No. 196767/1985, No. 218652/1985, No. 233156/1985, No. 48552/1988 and No. 267552/1991). However, it has been difficult to find out a compound suitable for the preparation of a highly sensitive photoreceptor.

The present inventors have conducted extensive researches on low molecular weight photoconductive compounds which are capable of presenting electrophotographic photoreceptors having high sensitivity and high durability and as a result, have found that certain compounds are suitable for this purpose. The present invention has been accomplished on the basis of this discovery.

Thus, the present invention provides an electrophotographic photoreceptor comprising an electrically conductive substrate and a photosensitive layer formed thereon, wherein said photosensitive layer contains at least one member selected from the group consisting of compounds of the following formula (I): 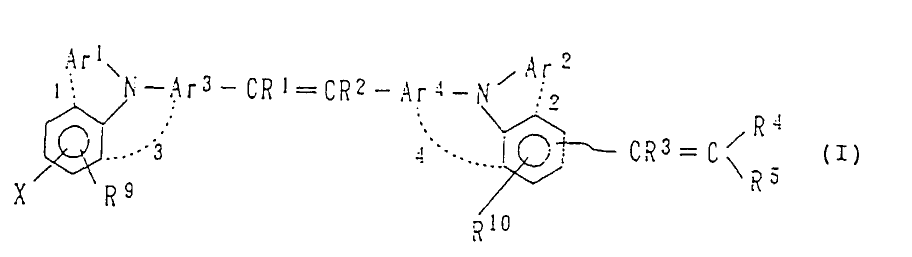 wherein X is a hydrogen atom or a group of -CR⁶=C(R⁷)R⁸; each of Ar¹ and Ar² which may be the same or different, is an alkyl group which may have substituents, an aryl group which may have substituents, or a heterocyclic group which may have substituents; each of Ar³ and Ar⁴ which may be the same or different, is an arylene group which may have substituents, or a bivalent heterocyclic group which may have substituents; each of R¹, R², R³, R⁴, R⁵, R⁶, R⁷ and R⁸ which may be the same or different is a hydrogen atom, an alkyl group which may have substituents, an aryl group which may have substituents, or a heterocyclic group which may have substituents (provided that when either one of R⁴ and R⁵, or R⁷ and R⁸, is a hydrogen atom or an alkyl group, the other is an aryl group or a heterocyclic group); each of R⁹ and R¹⁰ which may be the same or different, is a hydrogen atom, a halogen atom, an alkyl group which may have substituents, an alkoxy group which may have substituents, or a substituted amino group; dotted line 1 indicates that Ar¹ may bond as shown by the dotted line to the aromatic group bonded to the nitrogen atom to form a structure of the formula (A-III) or (A-IV), dotted line 2 indicates that Ar² may bond as shown by the dotted line to the aromatic group bonded to the nitrogen atom to form a structure of the formula (A-V) or (A-VI), dotted line 3 indicates that Ar³ may bond as shown by the dotted line to the aromatic group bonded to the nitrogen atom to form a structure of the formula (A-VII) or (A-VIII), and dotted line 4 indicates that Ar⁴ may bond as shown by the dotted line to the aromatic group bonded to the nitrogen atom to form a structure of the formula (A-IX) or (A-X):

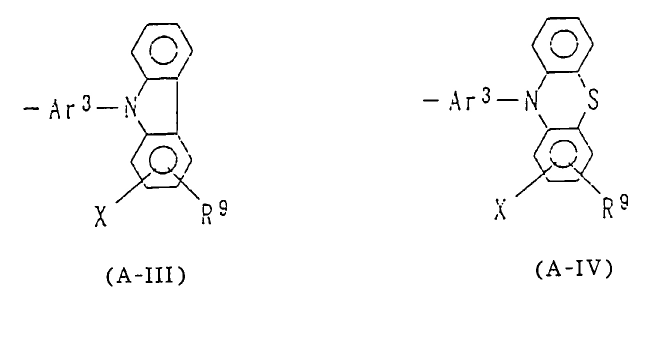

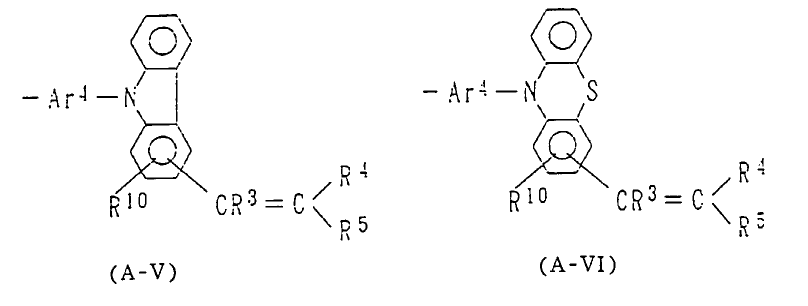

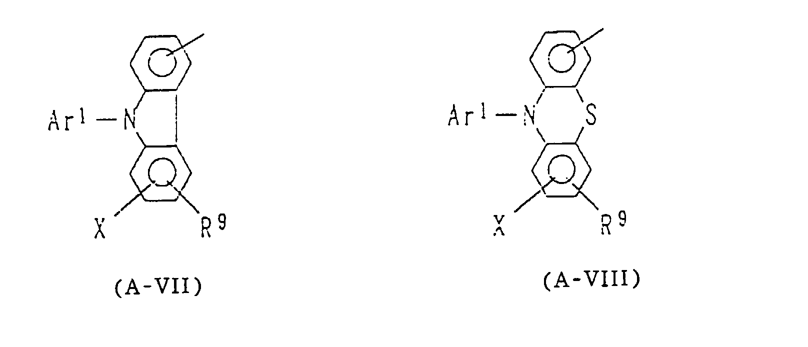

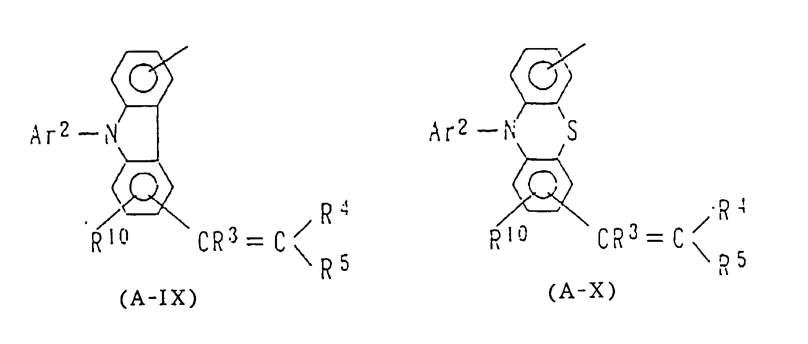

In the accompanying drawings:

Figure 1 is an infrared absorption spectrum of the stilbene compound obtained in Preparation Example 2.

Figure 2 is an infrared absorption spectrum of the stilbene compound obtained in Preparation Example 4.

Now, the present invention will be described in detail with reference to the preferred embodiments.

In the electrophotographic photoreceptor of the present invention, the photosensitive layer contains at least one member selected from the group consisting of compounds of the above formula (I).

In the above formula (I), X is a hydrogen atom or a group of -CR⁶=C(R⁷)R⁸.

Each of Ar¹ and Ar² which may be the same or different, is an alkyl group such as a methyl group, an ethyl group or a propyl group; an aryl group such as a phenyl group, a naphthyl group or an anthracenyl group; or a heterocyclic group such as a pyrrolyl group, a thiophenyl group, a furyl group or a carbazolyl group, particularly preferably a phenyl group. The alkyl group, the aryl group and the heterocyclic group may, respectively, have substituents. Such substituents may, for example, be a hydroxyl group; a halogen atom such as a chlorine atom, a bromine atom or an iodine atom; an alkyl group such as a methyl group, an ethyl group, a propyl group, a butyl group or a hexyl group; an alkoxy group such as a methoxy group, an ethoxy group or a butoxy group; an allyl group; an aralkyl group such as a benzyl group, a naphthylmethyl group or a phenethyl group; an aryloxy group such as a phenoxy group or a tolyloxy group; an arylalkoxy group such as a benzyloxy group or a phenethyloxy group; an aryl group such as a phenyl group or a naphthyl group; an arylvinyl group such as a styryl group or a naphthylvinyl group; a dialkylamino group such as a dimethylamino group or a diethylamino group; a diarylamino group such as a diphenylamino group or a dinaphthylamino group; a diaralkylamino group such as a dibenzylamino group or a diphenethylamino group; a di-heterocyclic amino group such as a dipyridylamino group or a dithienylamino group; a diallylamino group; or a di-substituted amino group having an optional combination of the above-mentioned substituents for the amino groups.

Each of Ar³ and Ar⁴ which may be the same or different, is an arylene group such as a phenylene group, a naphthylene group or an anthracenylene group; or a bivalent heterocyclic group such as a pyrrolidene group, a thienylidene group or a furylidene group, particularly preferably a phenylene group or a naphthylene group. The arylene group and the bivalent heterocyclic group may, respectively, have substituents. Such substituents may, for example, be a hydroxyl group; a halogen atom such as a chlorine atom, a bromine atom or an iodine atom; an alkyl group such as a methyl group, an ethyl group, a propyl group, a butyl group or a hexyl group; an alkoxy group such as a methoxy group, an ethoxy group or a butoxy group; an allyl group; an aralkyl group such as a benzyl group, a naphthylmethyl group or a phenethyl group; an aryloxy group such as a phenoxy group or a tolyloxy group; an arylalkoxy group such as a benzyloxy group or a phenethyloxy group; an aryl group such as a phenyl group or a naphthyl group; an arylvinyl group such as a styryl group or a naphthylvinyl group; a dialkylamino group such as a dimethylamino group or a diethylamino group; a diarylamino group such as a diphenylamino group or dinaphthylamino group; a diaralkylamino group such as a dibenzylamino group or a diphenethylamino group; a di-heterocyclic amino group such as a dipyridylamino group or a dithienylamino group; a diallylamino group; or a di-substituted amino group having an optional combination of the above-mentioned substituents for the amino groups.

Each of R¹, R², R³, R⁴, R⁵, R⁶, R⁷ and R⁸ which may be the same or different, is a hydrogen atom; an alkyl group such as a methyl group, an ethyl group or a propyl group; an aryl group such as a phenyl group, a naphthyl group or an anthracenyl group; or a heterocyclic group such as a pyrrolyl group, a thiophenyl group, a furyl group or a carbazolyl group. The alkyl group, the aryl group and the heterocyclic group may, respectively, have substituents. Such substituents may, for example, be a hydroxyl group; a halogen atom such as a chlorine atom, a bromine atom or an iodine atom; an alkyl group such as a methyl group, an ethyl group, a propyl group, a butyl group or a hexyl group; an alkoxy group such as a methoxy group, an ethoxy group or a butoxy group; an allyl group; an aralkyl group such as a benzyl group, a naphthylmethyl group or a phenethyl group; an aryloxy group such as a phenoxy group or a tolyloxy group; an arylalkoxy group such as a benzyloxy group or a phenethyloxy group; an aryl group such as a phenyl group or a naphthyl group; an arylvinyl group such as a styryl group or a naphthylvinyl group; a dialkylamino group such as a dimethylamino group or a diethylamino group; a diarylamino group such as a diphenylamino group or a dinaphthylamino group; a diaralkylamino group such as a dibenzylamino group or a diphenethylamino group; a di-heterocyclic amino group such as a dipyridylamino group or a dithienylamino group; a diallylamino group; or a di-substituted amino group having an optional combination of the above-mentioned substituents for the amino groups.

However, when one of R⁴ and R⁵, or one of R⁷ and R⁸, is a hydrogen atom or an alkyl group, the other is an aryl group or a heterocyclic group.

Each of R⁹ and R¹⁰ which may be the same or different, is a hydrogen atom; a halogen atom such as a chlorine atom, a bromine atom or an iodine atom; an alkyl group such as a methyl group or a propyl group; an alkoxy group such as a methoxy group, an ethoxy group or a propyloxy group; a dialkylamino group such as a dimethylamino group; a diarylamino group such as a diphenylamino group; a diaralkylamino group such as a dibenzylamino group; a di-heterocyclic amino group such as a dipyridylamino group; a diallylamino group; or a di-substituted amino group having an optional combination of the above substituents for the amino groups, particularly preferably, a hydrogen atom, a methyl group or a methoxy group. The alkyl group and the alkoxy group may have substituents. Such substituents may, for example, be a hydroxyl group; a halogen atom such as a chlorine atom, a bromine atom or a iodine atom; an alkyl group such as a methyl group, an ethyl group, a propyl group, a butyl group or a hexyl group; an alkoxy group such as a methoxy group, an ethoxy group or a butoxy group; an allyl group; an aralkyl group such as a benzyl group, a naphthylmethyl group or a phenethyl group; an aryloxy group such as a phenoxy group or a tolyloxy group; an arylalkoxy group such as a benzyloxy group or a phenethyloxy group; an aryl group such as a phenyl group or a naphthyl group; an arylvinyl group such as a styryl group or a naphthylvinyl group; a dialkylamino group such as a dimethylamino group or diethylamino group; a diarylamino group such as a diphenylamino group or a dinaphthylamino group; a diaralkylamino group such as a dibenzylamino group or a diphenethylamino group; a di-heterocyclic amino group such as a dipyridylamino group or a dithienylamino group; a diallylamino group; or a di-substituted amino group having an optional combination of the above-mentioned substituents for the amino groups.

Dotted line 1 indicates that Ar¹ may bond as shown by the dotted line to the aromatic group bonded to the nitrogen atom to form a structure of the above formula (A-III) or (A-IV), dotted line 2 indicates that Ar² may bond as shown by the dotted line to the aromatic group bonded to the nitrogen atom to form a structure of the above formula (A-V) or (A-VI), dotted line 3 indicates that Ar³ may bond as shown by the dotted line to the aromatic group bonded to the nitrogen atom to form a structure of the above formula (A-VII) or (A-VIII), and dotted line 4 indicates that Ar⁴ may bond as shown by the dotted line to the aromatic group bonded to the nitrogen atom to form a structure of the above formula (A-IX) or (A-X).

Now, typical examples of the stilbene compound of the formula (I) will be given, but it should be understood that the stilbene compound useful in the present invention is by no means restricted to such specific examples.

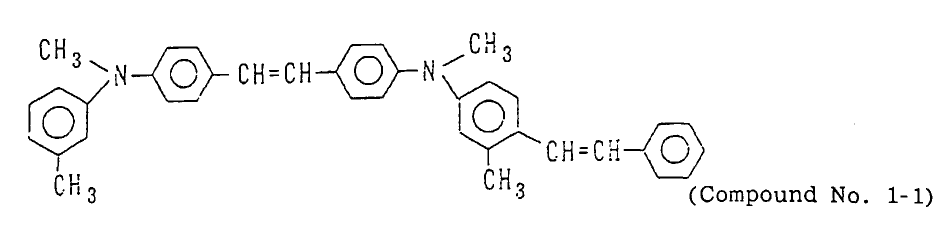

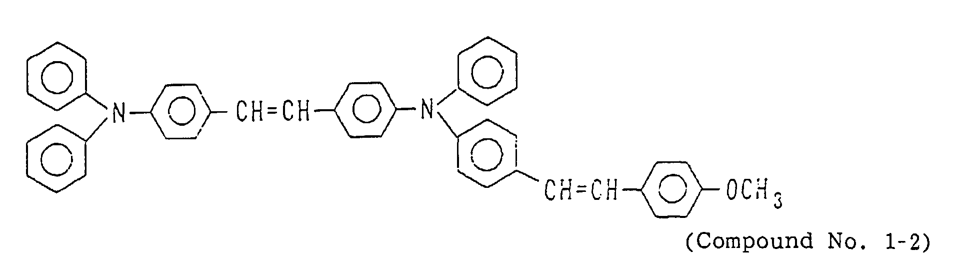

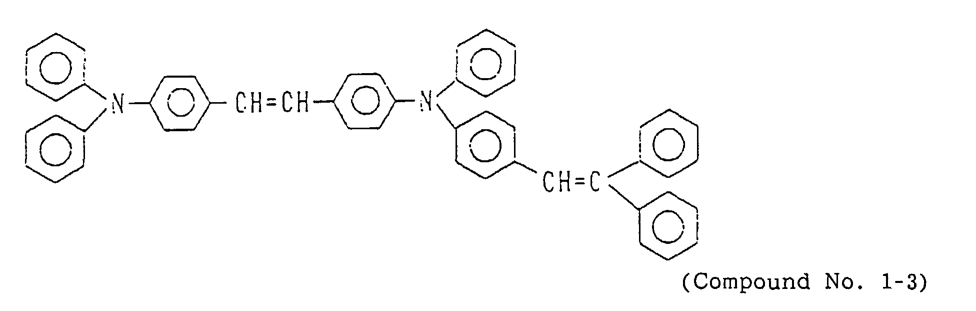

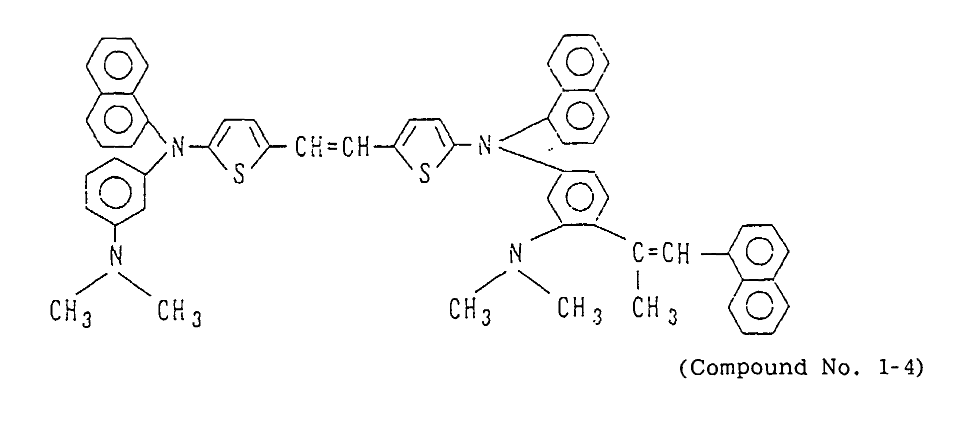

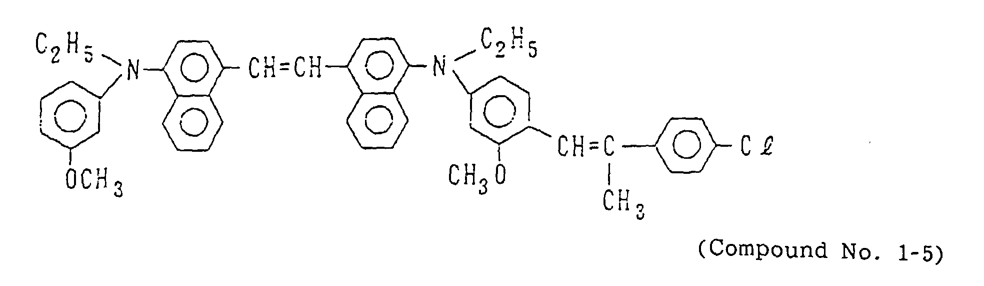

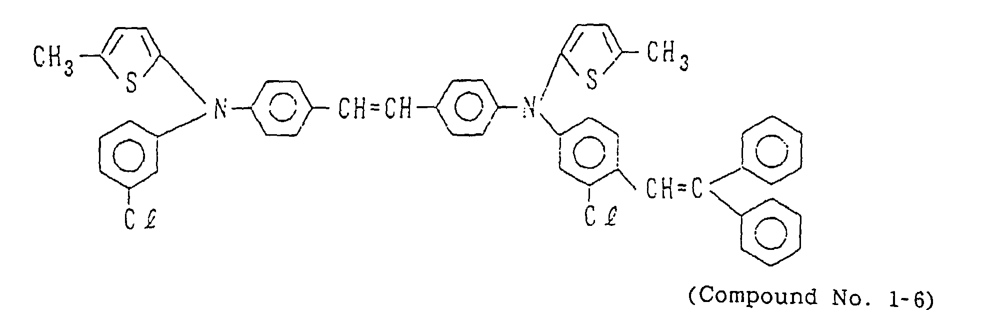

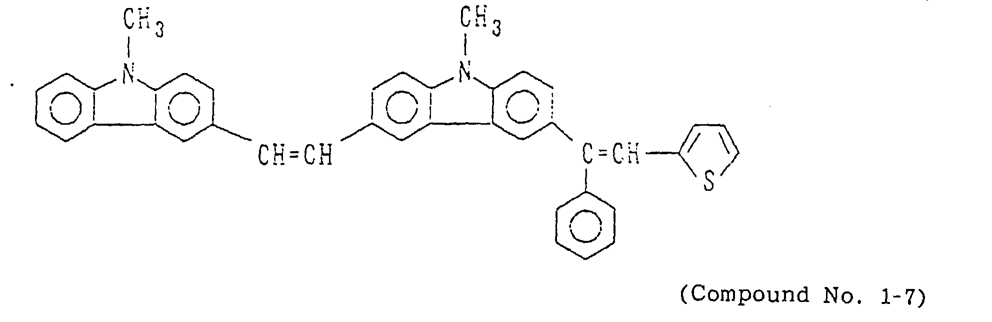

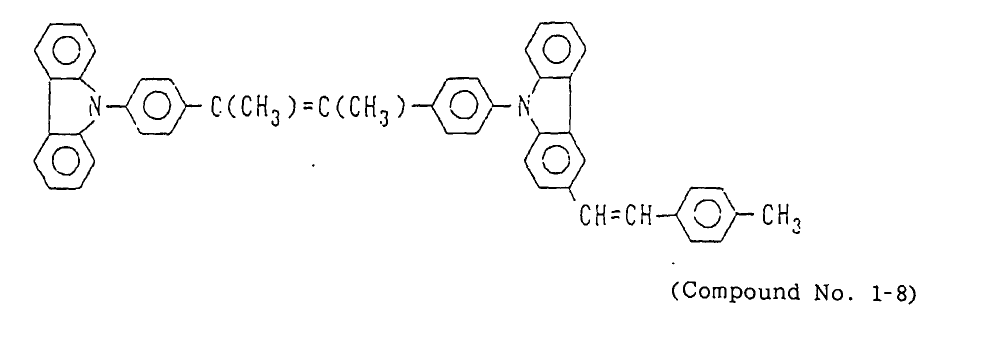

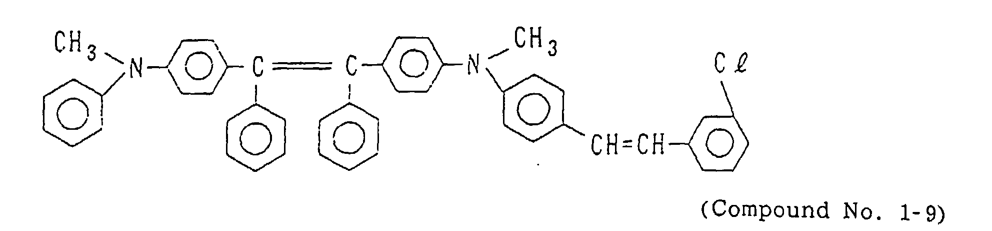

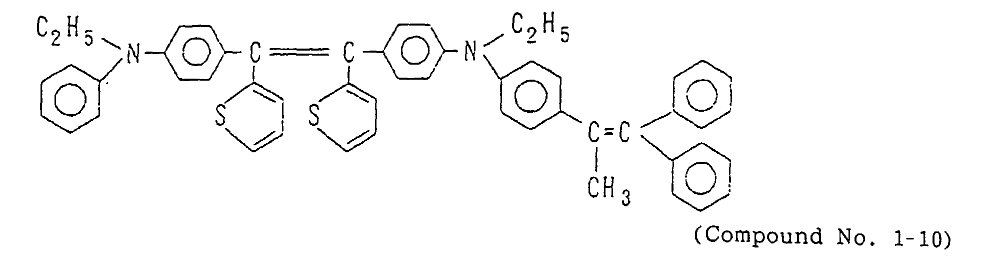

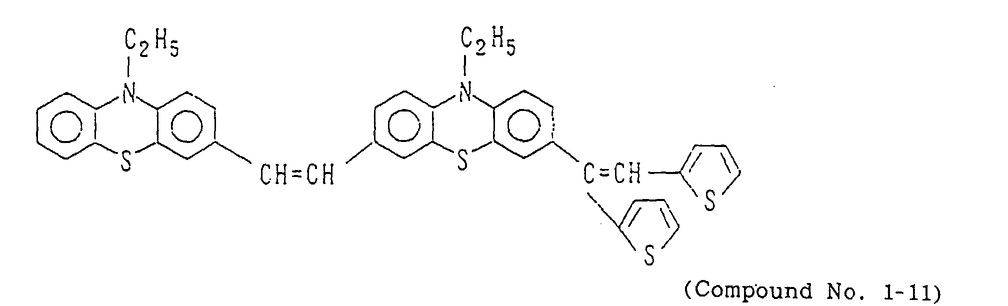

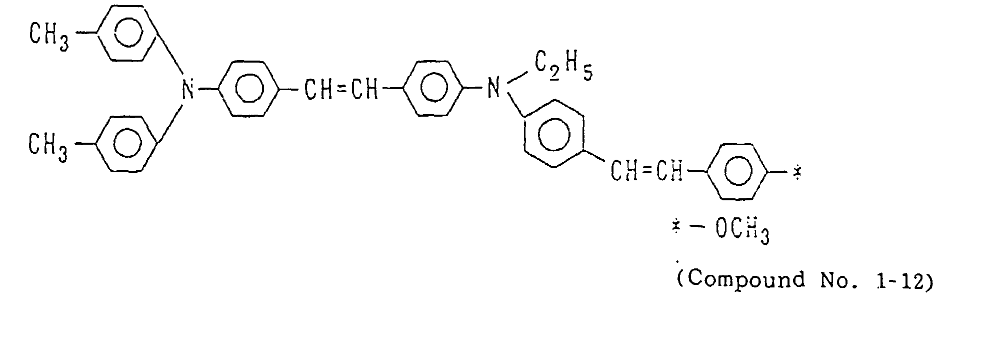

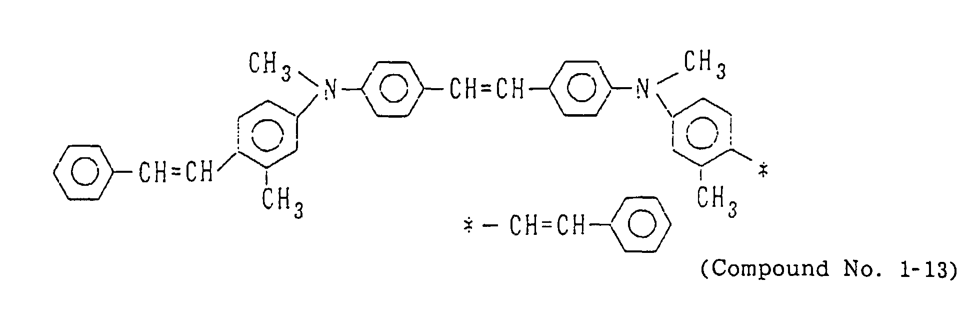

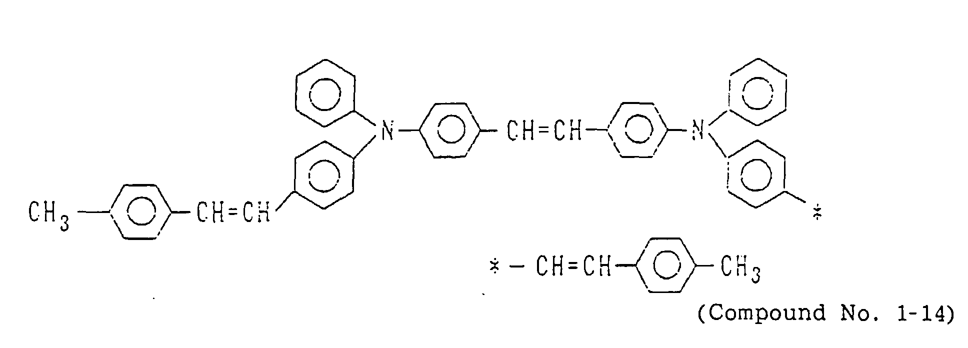

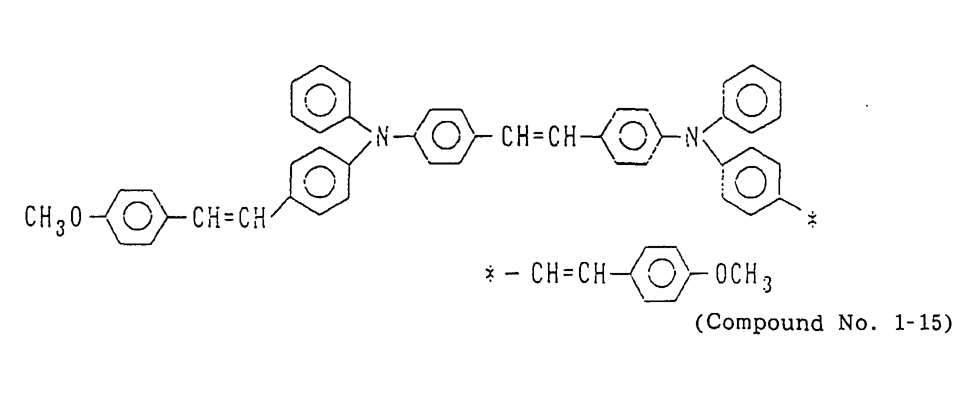

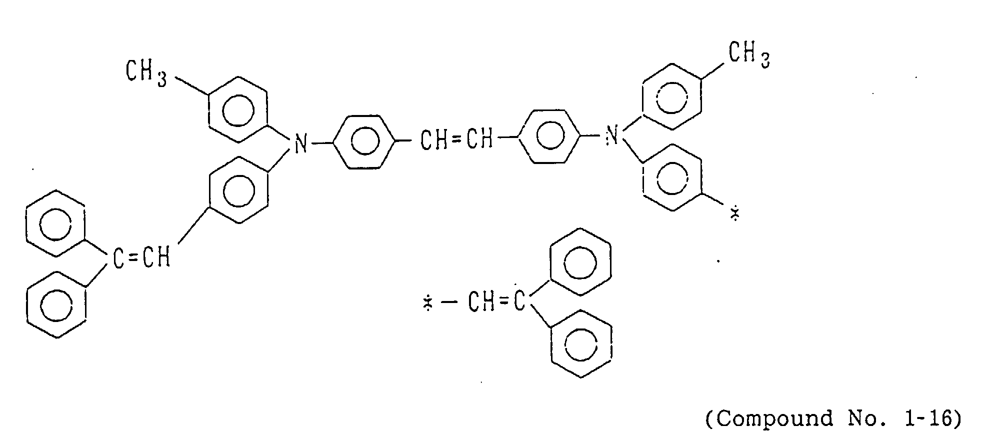

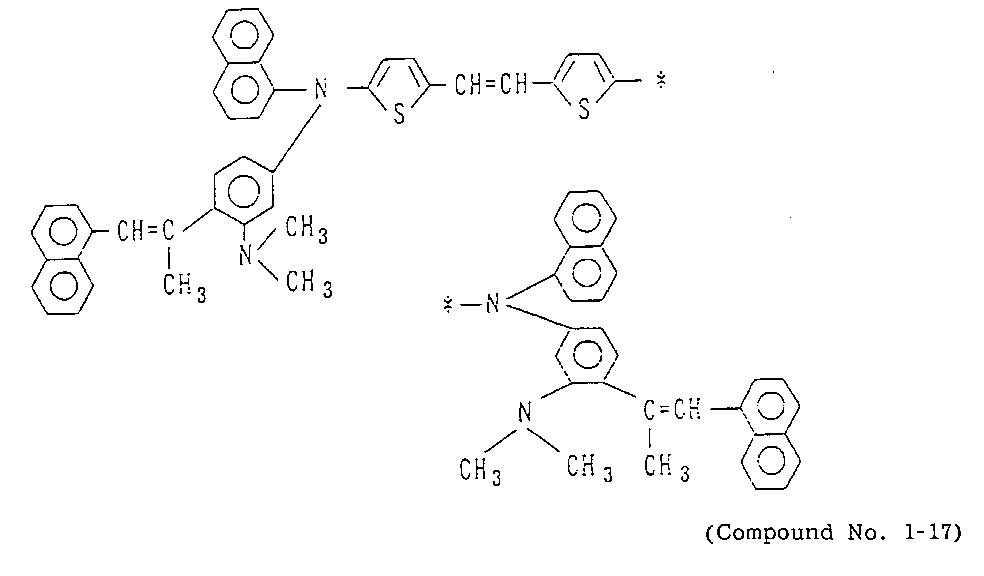

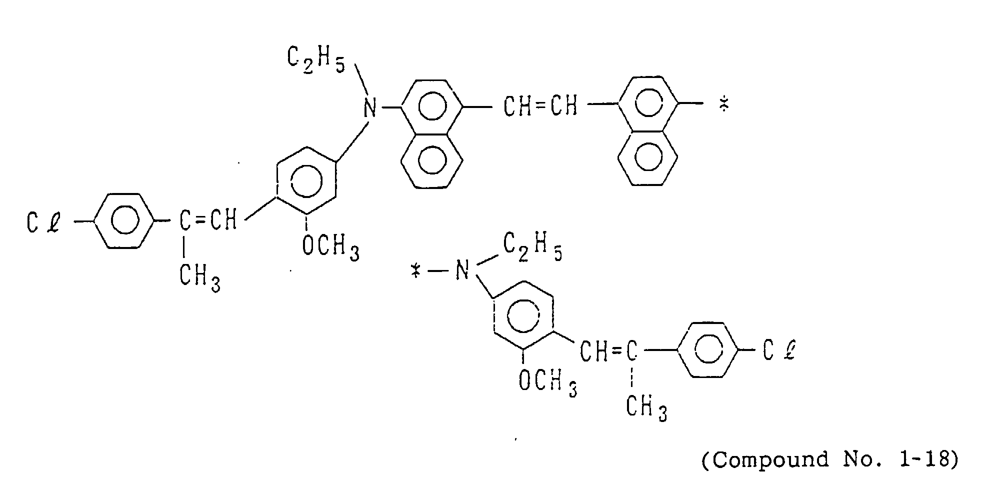

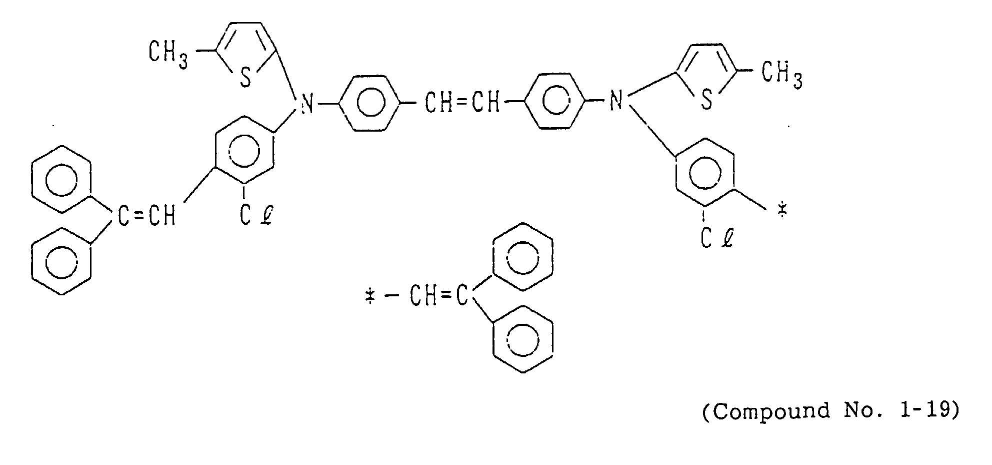

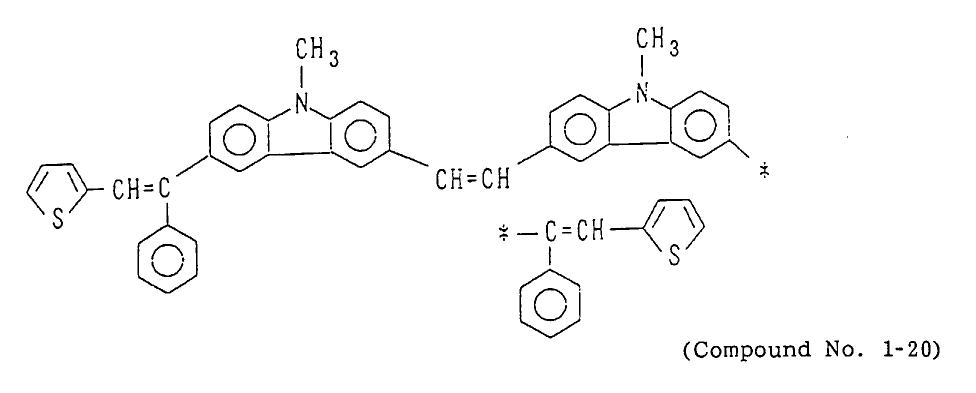

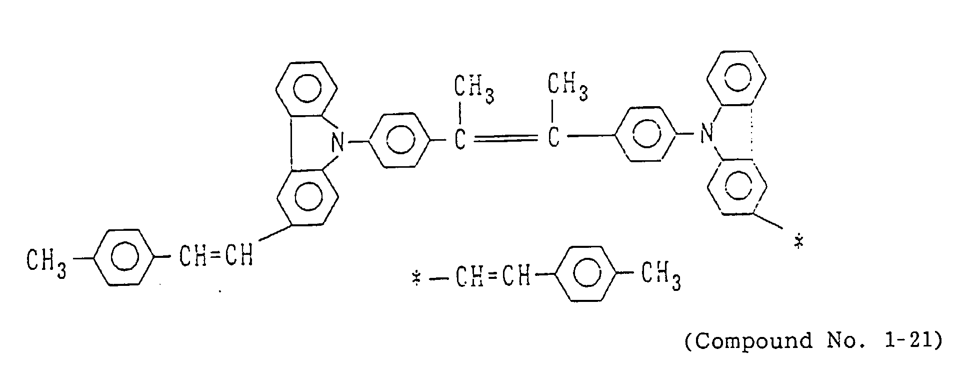

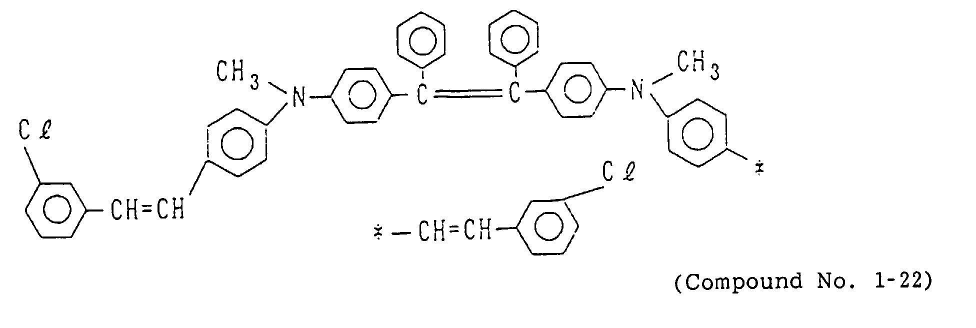

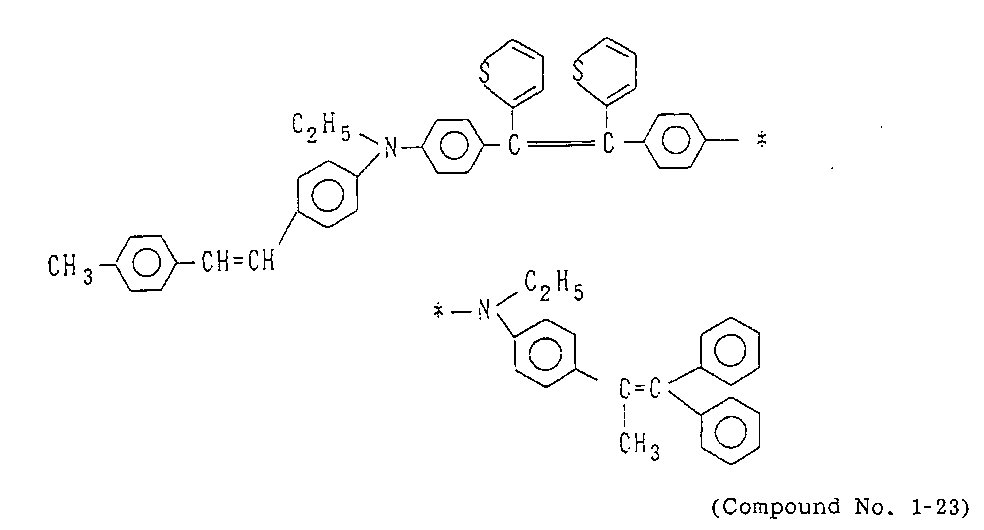

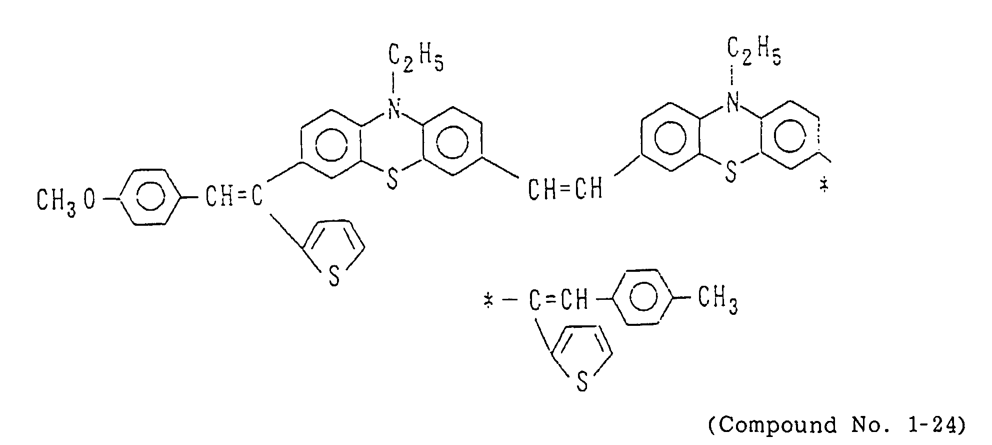

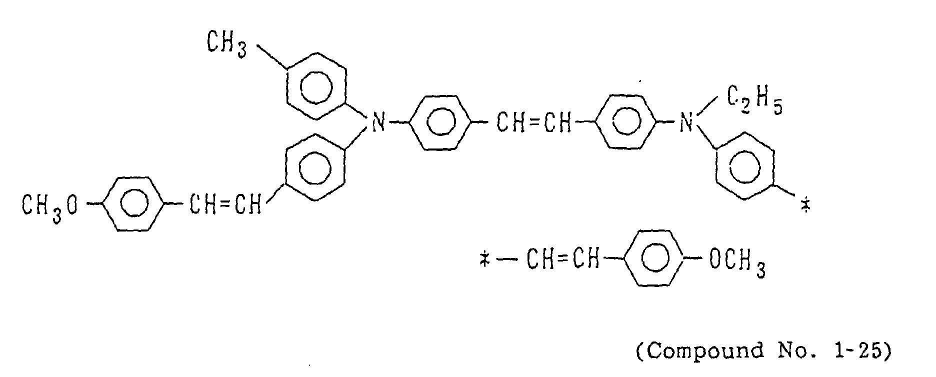

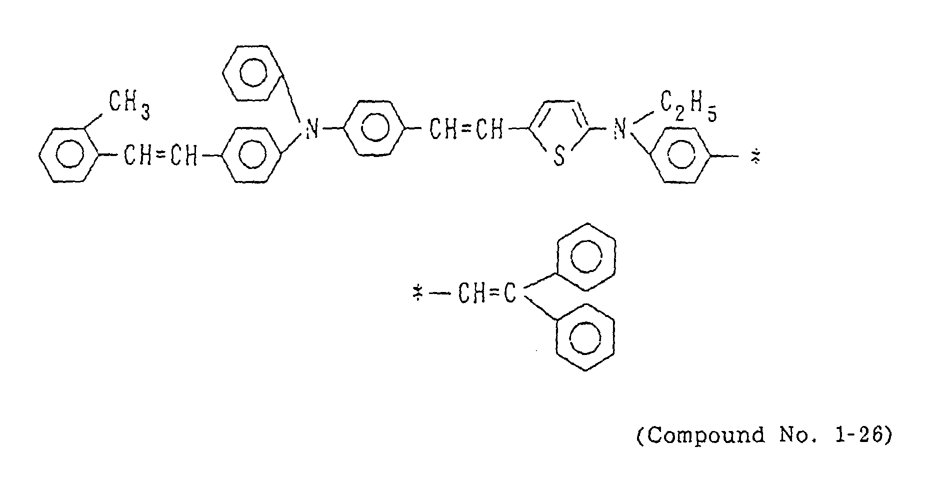

The stilbene compound of the above formula (I) can be prepared by a conventional method. A preferred method will be described with respect to cases where X=H and X is -C⁶=C(R⁷)R⁸.

### When X=H

Using a known stilbene compound as the starting material, a conventional carbonyl-introducing reaction is conducted, followed by a Wittig reaction to obtain the desired compound.

This method will be described in further detail as follows:

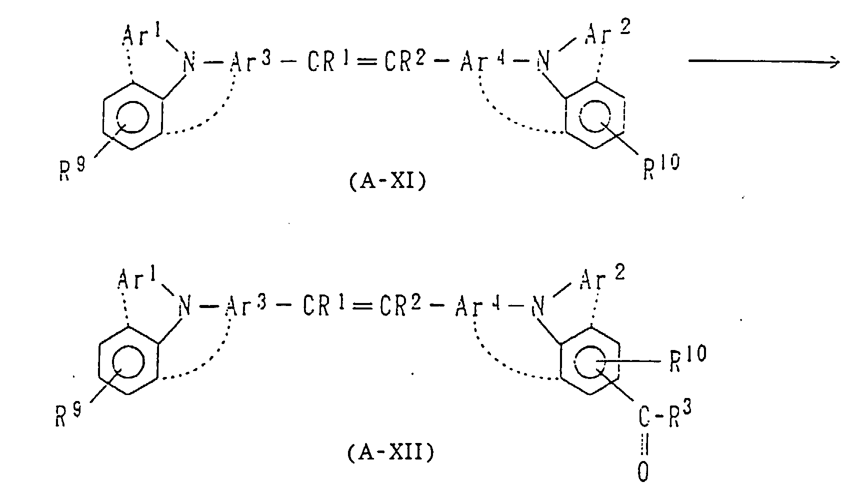

### ① When R³=H

A stilbene compound of the formula (A-XI) (in the formulas (A-XI) and (A-XII), Ar¹, Ar², Ar³, Ar⁴, R¹, R², R⁹ and R¹⁰ are as defined with respect to the formula (I)) is reacted with a formylating agent such as N,N-dimethylformamide or N-methylformanilide in the presence of phosphorus oxychloride to obtain an aldehyde product of the formula (A-XII).

The formylating agent may be used in a large excess so that it serves as a solvent for the reaction. However, a solvent inert to the reaction such as o-dichlorobenzene or benzene may be employed.

### ② When R³≠H

The stilbene compound of the formula (A-XI) is reacted with an acid chloride of the formula Cl-CO-R³ in a solvent such as nitrobenzene, dichloromethane or carbon tetrachloride in the presence of a Lewis acid such as alminum chloride, iron chloride or zinc chloride to obtain a ketone product of the formula (A-XII).

Then, the aldehyde or ketone of the formula (A-XII) and a Wittig reagent obtained by reacting a halide of the formula (A-XIII) (in the formula (A-XIII), R⁴ and R⁵ are as defined with respect to the formula (I), and X is a halogen atom such as a chlorine atom or a bromine atom, the same applies hereinafter) with triphenylphosphine in a known organic solvent inert to the reaction such as N,N-dimethylformamide, N,N-dimethylacetamide, tetrahydrofuran, dioxane, benzene or toluene, are reacted at a temperature of from 10 to 200°C, preferably from 20 to 100°C in the presence of a known base such as butyl lithium, phenyl lithium, sodium methoxide, sodium ethoxide or potassium t-butoxide, to obtain a compound of the formula (I).

Here, a product of cis-form, trans-form or a mixture of cis- and trans-forms may be obtained. (Hereinafter, the formula (I) represents any one of the cis-form, the trans-form and the mixture of the cis- and trans-forms). 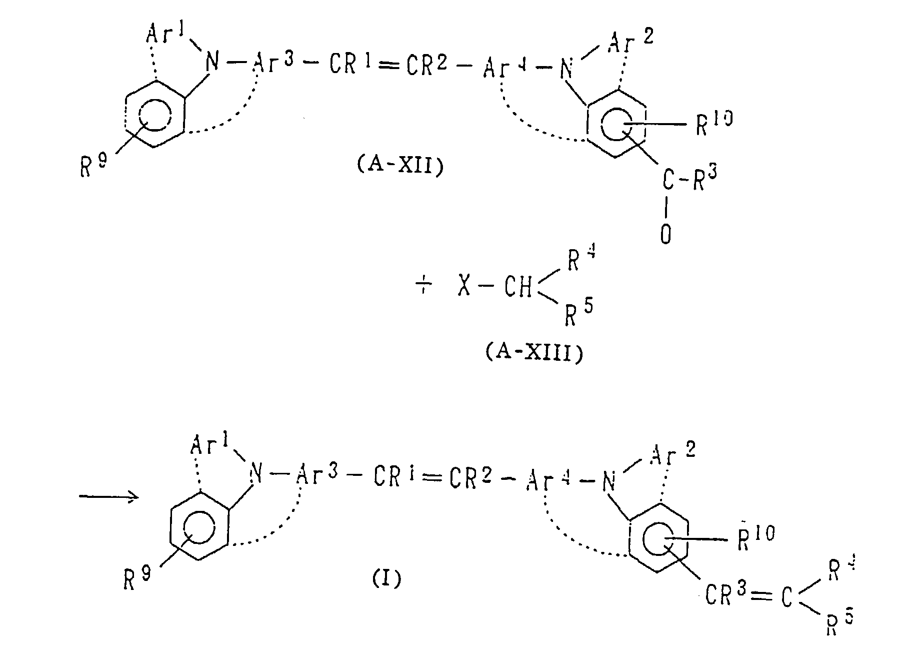 When X = -CR⁶=C(R⁷)R⁸, there are two methods.

(1) For example, using a known stilbene compound as the starting material, a conventional carbonyl-introducing reaction is conducted, followed by a Wittig reaction to obtain the desired compound.

This method will be described in detail, as follows:

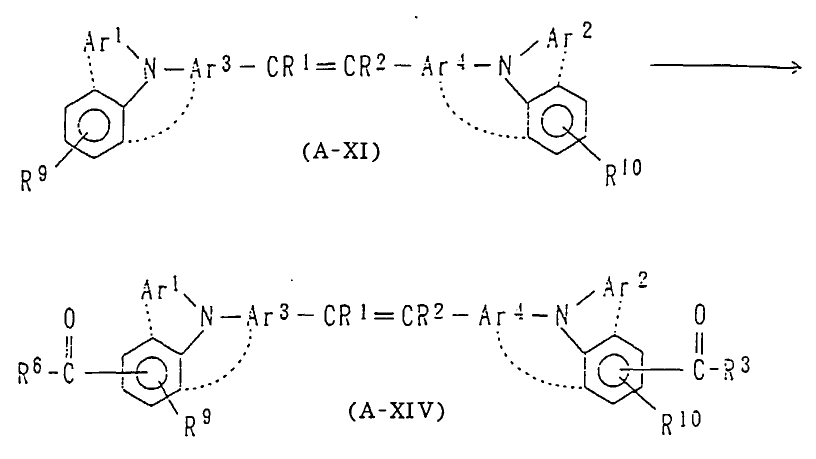

### ① When R³=R⁶=H

The stilbene compound of the formula (A-XI) is reacted with a formylating agent such as N,N-dimethylformamide or N-methylformanilide in the presence of phosphorus oxychloride to obtain an aldehyde product of the formula (A-XIV) (wherein Ar¹, Ar², Ar³, Ar⁴, R¹, R², R³, R⁶, R⁹ and R¹⁰ are as defined with respect to the formula (I)).

The formylating agent may be used in a large excess, so that it serves as a solvent for the reaction. However, a solvent inert to the reaction, such as o-dichlorobenzene or benzene, may be employed.

### ② When R³≠H, and R⁶≠H

The stilbene compound of the formula (A-XI) is reacted with an acid chloride of the formula Cl-CO-R³ or Cl-CO-R⁶ in a solvent such as nitrobenzene, dichloromethane or carbon tetrachloride in the presence of a Lewis acid such as aluminum chloride, iron chloride or zinc chloride to obtain a ketone product of the formula (A-XIV).

Further, in a case where R³ and R⁶ may be the same or different, and R⁶≠R⁸, the acid chloride to be added, may be mixed or stepwise added to accomplish the reaction.

### ③ When one of R³ and R⁶ is a hydrogen atom, and the other is not a hydrogen atom

This can be accomplished by conducting the above two methods stepwisely.

Then, the obtained aldehyde or ketone of the formula (A-XIV) and a Wittig reagent obtained by reacting halides of the formulas (A-XIII) and (A-XV) (in the formula (A-XV), R⁷ and R⁸ are as defined with respect to the formula (I), and X is a halogen atom such as a chlorine atom or a bromine atom, the same applies hereinafter) in a known organic solvent inert to the reaction, such as N,N-dimethylformamide, N,N-dimethylacetamide, tetrahydrofuran, dioxane, benzene or toluene, are reacted at a temperature of from 10 to 200°C, preferably from 20 to 100°C, in the presence of a known base such as butyl lithium, phenyl lithium, sodium methoxide, sodium ethoxide or potassium t-butoxide, to obtain a compound of the formula (I).

Here, a product of cis-form, trans-form and a mixture of cis- and trans-forms may be obtained. (Hereinafter, the formula (I) represents any one of the cis-form, the trans-form and the mixture of the cis- and trans-forms.

The compounds of the formulas (A-XIII) and (A-XV) may be used alone or in combination as a mixture. Otherwise, in some cases, they may be reacted stepwisely.

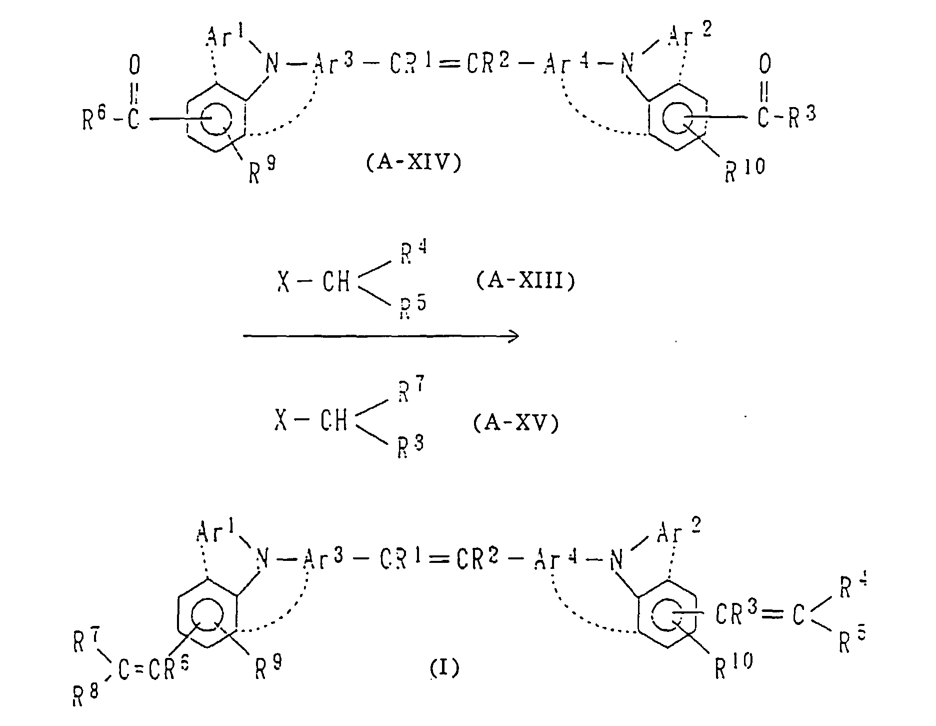

(2) For example, using a known stilbene compound, a conventional carbonyl-introducing reaction is conducted, followed by a two molecule condensation reaction to obtain the desired compound.

This method will be described in detail, as follows:

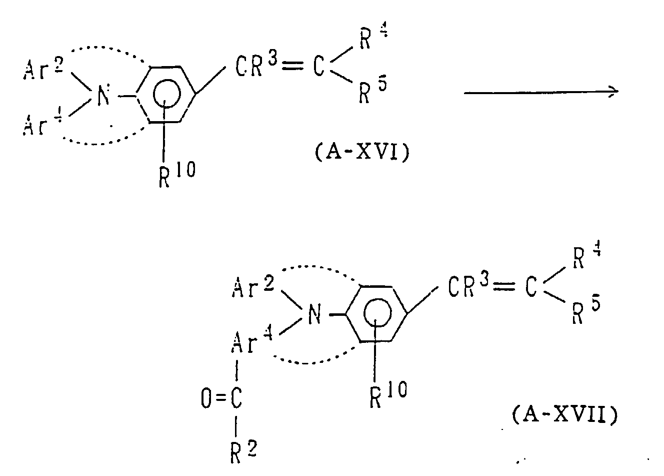

### ① When R²=H

A stilbene compound of the formula (A-XVI) (in the formulas (A-XVI) and (A-XVII), Ar², Ar⁴, R², R³, R⁴, R⁵ and R¹⁰ are as defined with respect to the formula (I)) is reacted with a formylating agent such as N,N-dimethylformamide or N-methylformanilide in the presence of phosphorus oxychloride to obtain an aldehyde product of the formula (A-XVII).

The formylating agent may be used in a large excess so that it serves as a solvent for the reaction. However, a solvent inert to the reaction, such as o-dichlorobenzene or benzene, may be employed.

### ② When R²≠H

The stilbene compound of the formula (A-XVI) is reacted with an acid chloride of the formula Cl=CO-R⁴ in a solvent such as nitrobenzene, dichloromethane or carbon tetrachloride in the presence of a Lewis acid such as aluminum chloride, iron chloride or zinc chloride, to obtain a ketone product of the formula (A-XVII).

Then, the aldehyde or ketone of the formulas (A-XVII) or (A-XVIII) (in the formula (A-XVIII), Ar¹, Ar³, R¹, R⁶, R⁷, R⁸ and R⁹ are as defined with respect to the formula (I)) is reacted with a reagent prepared from e.g. titanium trichloride and potassium, titanium trichloride and lithium, titanium trichloride and lithium aluminium hydride, titanium trichloride and magnesium, titanium tetrachloride and lithium aluminium hydride, titanium tetrachloride and zinc, tungsten hexachloride and lithium aluminium hydride, or tungsten tetrachloride and butyl lithium, at room temperature or under heating in a known organic solvent inert to the reaction such as tetrahydrofuran or dioxane, or reacted with triethyl phosphite under heating, or reacted with a reagent prepared from chlorodiphenylphosphine and sodium hydride, under heating, to obtain a compound of the formula (I). Here, a product of cis-form, trans-form and a mixture of cis- and trans-forms may be obtained. (Hereinafter, the formula (I) represents any one of the cis-form, the trans-form and the mixture of the cis- and trans-forms.) To suppress side reactions, a tertiary amine such as pyridine, triethylamine, tri-n-butylamine or 1,8-bis(dimethylamino)naphthalene, may be added, as the case requires.

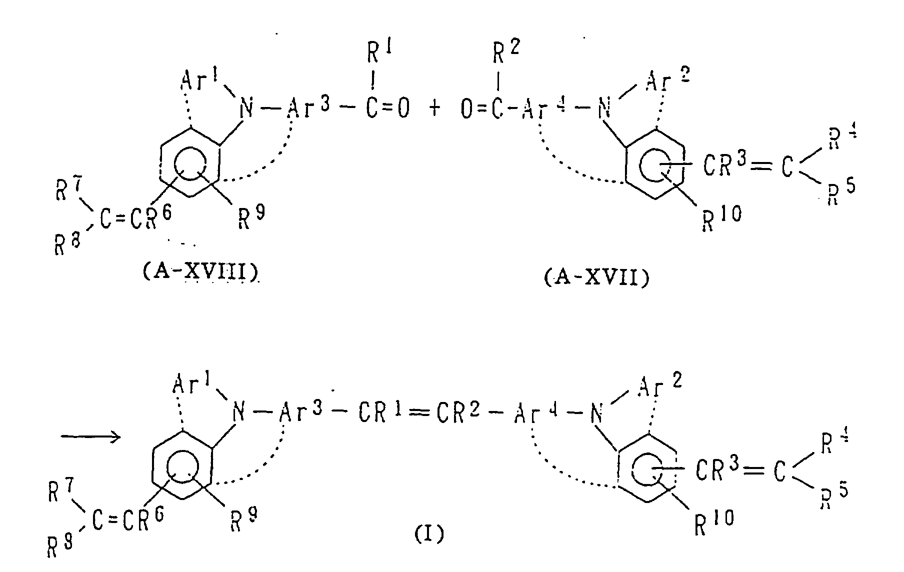

In these reactions, after completion of the respective steps or after completion of the entire process, the product can be purified by a conventional purification method such as recrystallization, sublimation or column chromatography to obtain a high purity product, as the case requires.

The electrophotographic photoreceptor of the present invention has a light sensitive layer containing at least one member selected from the group consisting of compounds of the above formula (I).

The compound of the formula (I) exhibits excellent performance as an organic photoconductive material. Especially when used as a carrier transporting medium, it presents a photoreceptor having a high sensitivity and excellent durability.

Various formulations are known for photosensitive layers of electrophotographic photoreceptors. Any one of conventional formulations may be used for the photosensitive layer of the electrophotographic photoreceptor of the present invention. For example, it may be a photosensitive layer having at least one member selected from the group consisting of compounds of the formula (I) and, as the case requires, a colorant which serves as a sensitizer or an electron attracting compound, incorporated in a binder, a photosensitive layer having photoconductive particles capable of generating electric charge carriers at an extremely high efficiency upon absorption of light and at least one member selected from the group consisting of compounds of the formula (I) incorporated in a binder, or a photosensitive layer having a carrier transport layer comprising at least one member selected from the group consisting of compounds of the formulas (I) and a binder and a carrier-generating layer comprising photoconductive particles capable of generating electric charge carriers at an extremely high efficiency upon absorption of light, or such particles and a binder, laminated.

Such a photosensitive layer may further contain a known other hydrazone compound or stilbenzene compound having excellent performance as an organic photoconductor, together with at least one member selected from the group consisting of compounds of the formula (I).

In the present invention, especially when at least one member selected from the group consisting of compounds of the formula (I) is used in the carrier transport layer of the photosensitive layer comprising two layers i.e. the carrier generation layer and the carrier transport layer, it is possible to obtain a photoreceptor which has a particularly high sensitivity and a low residual potential and which when used repeatedly, exhibits no substantial change in the surface potential or no substantial deterioration of the sensitivity and no substantial accumulation of the residual potential and has excellent durability.

The electrophotographic photoreceptor of the present invention can be prepared by a conventional method in such a manner that at least one member selected from the group consisting of compounds of the above formula (I), is dissolved together with a binder in a suitable solvent, and as the case requires, photoconductive particles capable of generating electric charge carriers at an extremely high efficiency upon absorption of light, a sensitizing dye, an electron attracting compound as well as a plasticizer, a pigment and other additives, are added thereto to obtain a coating solution, and such a coating solution is coated on a conductive support and dried to form a photosensitive layer usually having a film thickness of from a few µm to a few tens µm. In a case of a photosensitive layer comprising two layers i.e a carrier generation layer and a carrier transport layer, the photoreceptor may be prepared either by coating the above coating solution on a carrier generation layer, or forming a carrier generation layer on a carrier transport layer obtained by coating the above coating solution.

The solvent for the preparation of the coating solution may be a solvent which is capable of dissolving the compound of the above formula (I), for example, an ether such as tetrahydrofuran, 1,4-dioxane; a ketone such as methyl ethyl ketone or cyclohexanone; an aromatic hydrocarbon such as toluene or xylene; an aprotic polar solvent such as N,N-dimethylformamide, acetonitrile, N-methylpyrrolidone or dimethylsulfoxide; an ester such as ethyl acetate, methyl formate or methyl cellosolve acetate; or a chlorinated hydrocarbon such as dichloroethane or chloroform. Of course, it is necessary to select the one which is capable of dissolving the binder, among these solvents.

As the binder, various polymers compatible with a styrene compound may be employed, including polymers and copolymers of a vinyl compound such as styrene, vinyl acetate, vinyl chloride, an acrylate, a methacrylate or butadiene, polyvinylacetal, polycarbonate, polyester, polysulfone, polyphenylene oxide, polyurethane, cellulose ester, cellulose ether, a phenoxy resin, a silicone resin and an epoxy resin. The binder is used usually in an amount of from 0.5 to 30 times by weight, preferably from 0.7 to 10 times by weight, relative to the amount of at least one member (or the total amount of two or more members) selected from the group consisting of compounds of the above formula (I).

As the photoconductive particles, the sensitizing dye and the electron attracting compound to be added to the photosensitive layer, the respective conventional products can be used. The photoconductive particles capable of generating electric charge carriers at an extremely high efficiency upon absorption of light, may, for example, be inorganic photoconductive particles of e.g. selenium, a selenium-tellurium alloy, a sellenium-arsenic alloy, cadmium sulfide or amorphous silicon; or organic photoconductive particles of e.g. metal-containing phthalocyanine, perynone pigment, thioindigo, quinacridone, perylene pigment, anthraquinone pigment, azo pigment, bisazo pigment, trisazo pigment, tetrakisazo pigment or cyanine pigment. (Especially when metal-containing phthalocyanine is incorporated, a photoreceptor having improved sensitivity to a laser beam can be obtained. As the dye, a triphenylmethane dye such as Ethyl Violet, Brilliant Green or Crystal Violet, a thiazine dye such as Methylene Blue, a quinone dye such as Quinizarin or a cyanine dye as well as a pyrylium salt, a thiapyrilium salt or a benzopyrylium salt, may be mentioned. Further, as the electron attracting compound which forms a carrier-transporting complex together with the stilbene compound, a quinone such as chloranil, 2,3-dichloro-1,4-naphthoquinone, 1-nitroanthraquinone, 1-chloro-5-nitroanthraquinone, 2-chloroanthraquinone or phenanthrenequinone; an aldehyde such as 4-nitrobenzaldehyde; a ketone such as 9-benzoylanthracene, indanedione, 3,5-dinitrobenzophenone, 2,4,7-trinitrofluorenone, 2,4,5,7-tetranitrofluorenone or 3,3',5,5'-tetranitrobenzophenone; an acid anhydride such as phthalic anhydride or 4-chloronaphthalic anhydride; a cyano compound such as tetracyano ethylene, terephthalalmalononitrile, 9-anthrylmethylidenemalononitrile, 4-nitrobenzalmalononitrile or 4-(p-nitrobenzoyloxy)benzalmalononitrile; or a phthalide such as 3-benzalphthalide, 3-(a-cyano-p-nitrobenzal)phthalide or 3-(a-cyano-p-nitrobenzal)-4,5,6,7-tetrachlorophthalide, may be mentioned.

Further, the photosensitive layer of the electrophotographic photoreceptor of the present invention may contain a well-known plasticizer to improve the film-forming properties, the flexibility or the mechanical strength. As the plasticizer to be incorporated to the above coating solution for this purpose, an aromatic compound such as a phthalic acid ester, a phosphoric acid ester, an epoxy compound, chlorinated paraffin, a chlorinated fatty acid ester or methyl naphthalene, may be mentioned. In a case where the stilbene compound is used as the carrier-transporting medium in the carrier transport layer, the coating solution may be of the above composition, but the photoconductive particles, the dye and the electron attracting compound may be eliminated or may be incorporated in small amounts. In this case, the carrier generation layer may be a thin layer formed by coating and drying a coating solution obtained by dissolving or dispersing the above photoconductive particles and optionally a binder polymer, an organic photoconductive material, a dye and an electron attractive compound in a solvent, or a layer obtained by forming the above photoconductive particles into a film by a method such as vapor deposition.

The photoreceptor thus formed, may, of course, have an adhesive layer, an inter layer or a transparent insulating layer, as the case requires. As a conductive substrate on which the photosensitive layer is formed, any substrate which is commonly employed in conventional electrophotographic photoreceptors, may be employed. Specifically, a drum or sheet of metal such as aluminum, stainless steel or copper, or a laminate of foils of such metal or a vapor deposited product of such metal, may be mentioned. Further, a plastic film, a plastic drum, paper or a paper tube having a conductive material such as metal powder, carbon black, copper iodide or polymer electrolyte coated together with a suitable binder for conductive treatment, may be mentioned. Or, a plastic sheet or drum having a conductive material such as metal powder, carbon black or carbon fiber incorporated to have electrical conductivity, may be mentioned.

The electrophotographic photoreceptor of the present invention has a feature that the sensitivity is very high, the residual potential which causes fogging, is small, and light fatigue is little, whereby it is excellent in the durability with no substantial accumulation of the residual potential and no substantial change in the surface potential and the sensitivity.

Now, the present invention will be described in further detail with reference to Examples. However, it should be understood that the present invention is by no means restricted to such specific Preparation Examples and Working Examples. In the following Examples, "parts" means "parts by weight".

### PREPARATION EXAMPLE 1

1.2 g of bis(p-diphenylamino)-l,2-diphenylethylene of the formula: 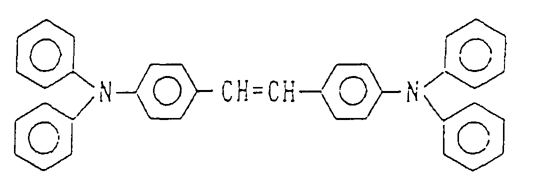 was dissolved in 24 ml of N,N-dimethylformamide, and then 1.1 ml of phosphorus oxychloride was added thereto. The mixture was then reacted at 80°C for 7 hours.

After cooling, the reaction solution was put into 200 g of ice water and hydrolyzed with sodium hydroxide, followed by extraction, concentration and purification treatments by conventional methods to obtain 0.4 g of a brown oil.

From the following results of the elemental analysis, the mass spectrometry, and the infrared absorption spectrum measurement, this compound was found to have the structure as identified below.

| Elemental analysis: as C₃₉H₃₀ON₂ | | | |
|---|---|---|---|
| | C% | H% | N% |
| Calculated | 86.32 | 5.57 | 5.16 |
| Found | 86.20 | 5.70 | 5.11 |

- Results of mass spectrometry:: as C₃₉H₃₀ON₂, MW=542
M⁺=542

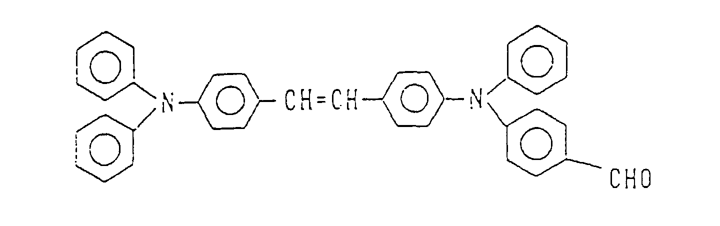

### PREPARATION EXAMPLE 2

0.4 g of the compound prepared in Preparation Example 1 and 0.6 g of p-methylbenzyltriphenylphosphonium bromide were dissolved in 7 ml of N,N-dimethylformamide, and 0.3 g of a solution containing 28% of sodium methoxide in methanol was dropwise added thereto. Then, the mixture was reacted at 65°C for two hours. After cooling, the reaction solution was put into 100 g of ice water, followed by extraction, concentration and purification treatments by conventional methods to obtain 0.3 g of a yellow oil.

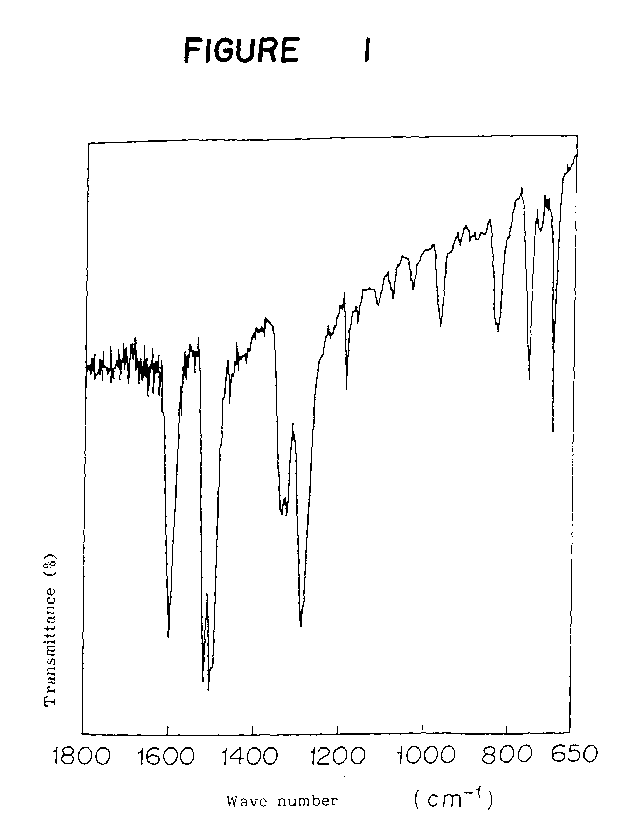

From the following results of the elemental analysis, the mass spectrometry, and the infrared absorption spectrum measurement (Figure 1), this compound was found to have the structure as identified below.

| Elemental analysis: as C₄₇H₃₈ON₂ | | | |
|---|---|---|---|
| | C% | H% | N% |
| Calculated | 89.49 | 6.07 | 4.44 |
| Found | 89.46 | 6.23 | 4.31 |

- Results of mass spectrometry:: as C₄₇H₃₈ON₂, MW=630
M⁺+1=631

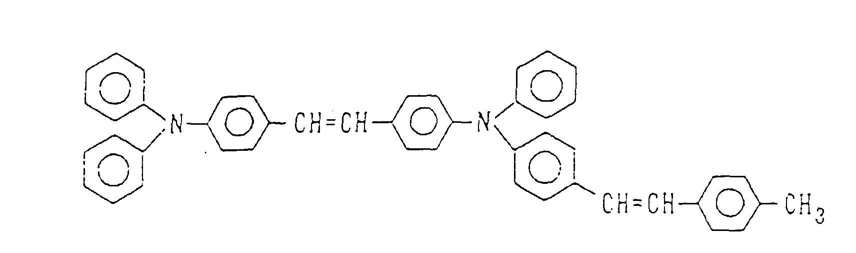

### PREPARATION EXAMPLE 3

2.0 g of the compound of the formula: 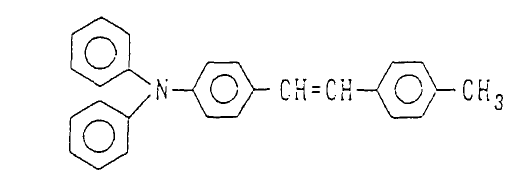 was dissolved in 20 ml of N,N-dimethylformamide, and then 0.8 ml of phosphorus oxychloride was added thereto. The mixture was then reacted at 75°C for one hour.

After cooling, the reaction solution was put into 200 g of ice water and hydrolyzed with sodium hydroxide, followed by extraction, concentration and purification treatments by conventional methods to obtain 1.1 g of an orange-colored oil.

From the following results of the elemental analysis, the mass spectrometry, and the infrared absorption spectrum measurement, this compound was found to have the structure as identified below.

| Elemental analysis: as C₂₈H₂₃ON | | | |
|---|---|---|---|
| | C% | H% | N% |
| Calculated | 86.34 | 5.95 | 3.60 |
| Found | 86.55 | 6.01 | 3.43 |

- Results of mass spectrometry:: as C₂₈H₂₃ON, MW=389
M⁺=389

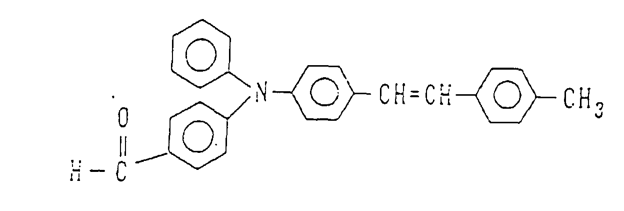

### PREPARATION EXAMPLE 4

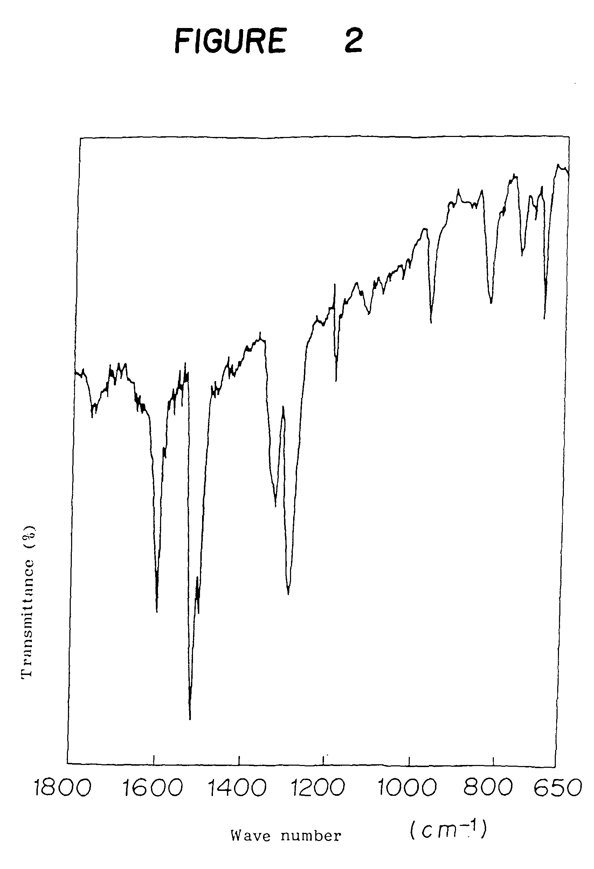

Under a nitrogen stream, 1.9 g of titanium tetrachloride was dropwise added to 40 ml of tetrahydrofuran at room temperature. Then, at the same temperature, 0.2 g of lithium aluminium hydride was added thereto. The mixture was then refluxed under heating for 20 minutes. Then, 0.8 g of the compound prepared in Preparation Example 3 and 2 ml of a solution containing 0.4 g of tri-n-butylamine in tetrahydrofuran were dropwise added to the reaction system under reflux by heating. The mixture was then reacted for 20 minutes under reflux by heating. After cooling, a 20% potassium carbonate aqueous solution was added to the reaction solution under cooling with ice until the solution became alkaline. Further, the reaction solution was filtered through Celite, and the filtrate was subjected to liquid separation, concentrated and purification treatments by conventional methods to obtain slightly yellow crystals (melting point: 119-121°C). From the following results of the elemental analysis, the mass spectrometry, and the infrared absorption spectrum measurement (Figure 2), this compound was found to have the structure as identified below. (Compound No. 14)

| Elemental analysis: as C₅₆H₄₆N₂ | | | |
|---|---|---|---|
| | C% | H% | N% |
| Calculated | 90.04 | 6.21 | 3.75 |
| Found | 89.91 | 6.43 | 3.66 |

- Results of mass spectrometry:: as C₅₆H₄₆N₂, MW=746
M⁺=746

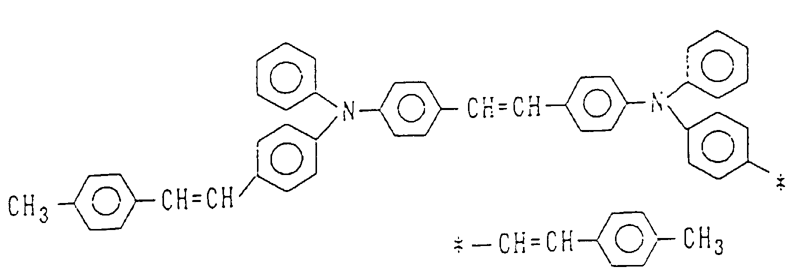

### EXAMPLE 1

1.0 part of titanium oxyphthalocyanine pigment and 0.5 part of polyvinylbutyral (polyvinylbutyral #6000, tradename, manufactured by Denki Kagaku Kogyo K.K.) were dispersed and pulverized in 30 parts of 4-methoxy-4-methylpentanone-2 (manufactured by Mitsubishi Kasei Corporation).

This dispersed liquid was coated by means of a wire bar, on an aluminum layer vapor-deposited on a polyester film having a film thickness of 100 µm, so that the weight after drying would be 0.2 g/m², followed by drying to form a carrier generation layer.

On this layer, a coating solution having 70 parts of the stilbene compound prepared in Preparation Example 2 and 100 parts of a polycarbonate resin of the formula: 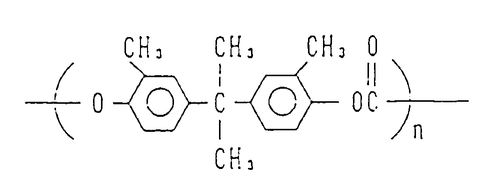 dissolved in 900 parts of dioxane, was coated and dried to form a carrier transport layer having a film thickness of 17 µm.

With respect to the electrophotographic photoreceptor having a photosensitive layer comprising the two layers thus formed, the sensitivity i.e. the half value exposure was measured and found to be 2.2 (µW/cm²)⁻¹.

The half value exposure was determined in such a manner that firstly, the photoreceptor was charged by corona discharge at -4.8 kV in a dark place and then subjected to exposure with a light of 775 nm, whereby the exposure required for attenuation of the surface potential from 500 V to 250 V was measured.

### EXAMPLE 2

A photoreceptor was prepared in the same manner as in Example 1 except that disazo pigment of the following formula was used instead of the phthalocyanine pigment used in Example 1. The photoreceptor was subjected to exposure, and the half value exposure was measured and found to be 1.3 lux·sec.

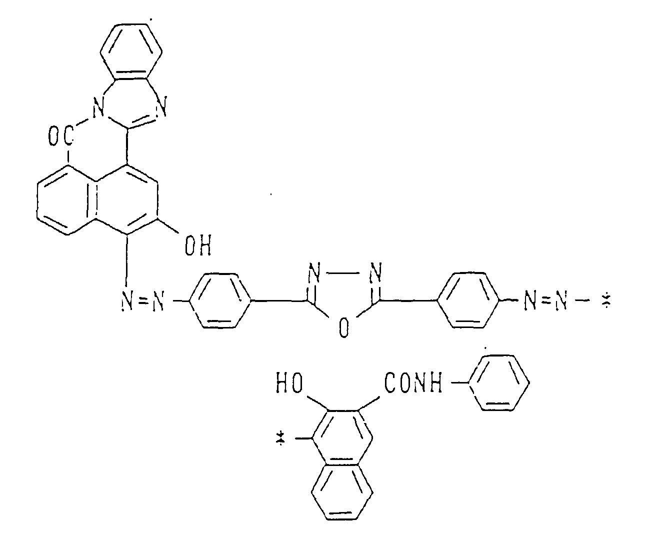

### EXAMPLES 3 TO 10

The sensitivity of the electrophotographic photoreceptor obtained by using the stilbene compound as identified in the following Table 1 prepared in the same manner as in Preparation Example 2 or 4, instead of the stilbene compound used in Example 1, and by using the same titanium oxyphthalocyanine pigment as used in Example 1, is shown in Table 1.

**Table 1**

| Example No. | Compound No. | Sensitivity (µW/cm²)⁻¹ |
|---|---|---|
| 3 | 1-2 | 2.2 |
| 4 | 1-6 | 1.3 |
| 5 | 1-7 | 0.9 |
| 6 | 1-12 | 1.3 |
| 7 | 1-14 | 2.8 |
| 8 | 1-18 | 1.0 |
| 9 | 1-21 | 1.7 |
| 10 | 1-25 | 1.5 |

## Claims

1. An electrophotographic photoreceptor comprising an electrically conductive substrate and a photosensitive layer formed thereon, wherein said photosensitive layer contains at least one compound of the following formula (I) 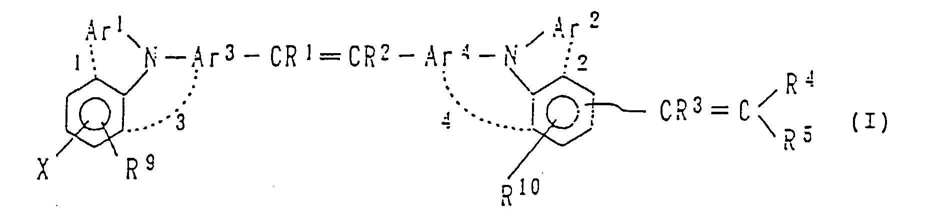 wherein X is a hydrogen atom or a group of -CR⁶=C(R⁷)R⁸; each of Ar¹ and Ar² which may be the same or different, is an alkyl group which may have substituents, an aryl group which may have substituents, or a heterocyclic group which may have substituents; each of Ar³ and Ar⁴ which may be the same or different, is an arylene group which may have substituents, or a bivalent heterocyclic group which may have substituents; each of R¹, R², R³, R⁴, R⁵, R⁶, R⁷ and R⁸ which may be the same or different, is a hydrogen atom, an alkyl group which may have substituents, an aryl group which may have substituents, or a heterocyclic group which may have substituents (provided that when either one of R⁴ and R⁵, or R⁷ and R⁸, is a hydrogen atom or an alkyl group, the other is an aryl group or a heterocyclic group); each of R⁹ and R¹⁰ which may be the same or different, is a hydrogen atom, a halogen atom, an alkyl group which may have substituents, an alkoxy group which may have substituents, or a substituted amino group; dotted line 1 indicates that Ar¹ may bond as shown by the dotted line to the aromatic group bonded to the nitrogen atom to form a structure of the formula (A-III) or (A-IV), dotted line 2 indicates that Ar² may bond as shown by the dotted line to the aromatic group bonded to the nitrogen atom to form a structure of the formula (A-V) or (A-VI), dotted line 3 indicates that Ar³ may bond as shown by the dotted line to the aromatic group bonded to the nitrogen atom to form a structure of the formula (A-VII) or (A-VIII), and dotted line 4 indicates that Ar⁴ may bond as shown by the dotted line to the aromatic group bonded to the nitrogen atom to form a structure of the formula (A-IX) or (A-X):

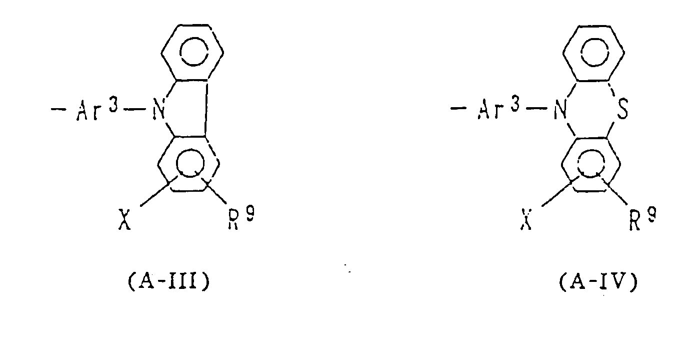

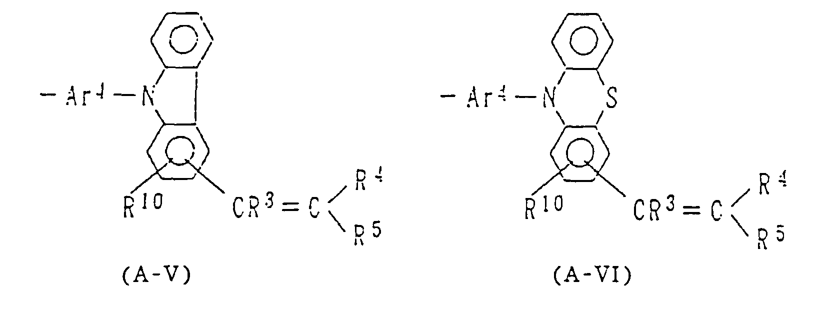

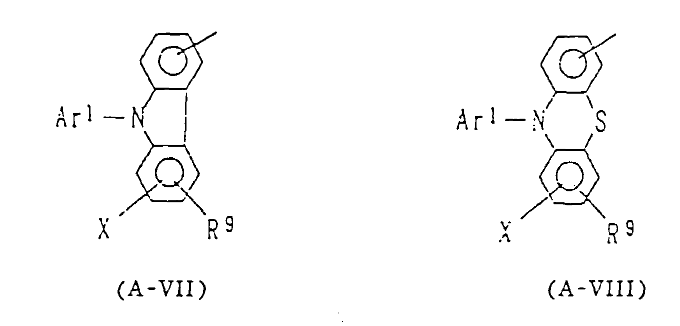

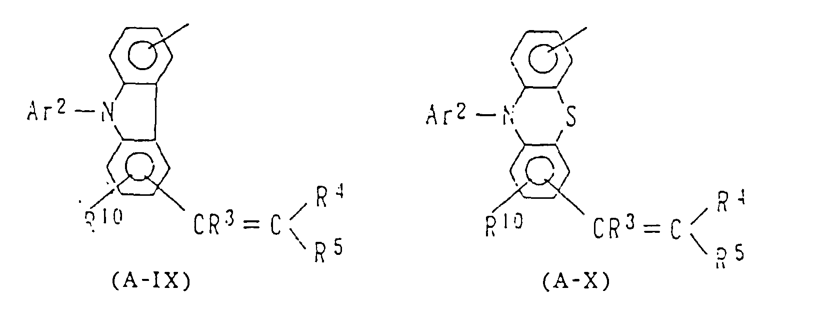

2. The electrophotographic photoreceptor according to Claim 1, wherein the photosensitive layer comprises a carrier generation layer and a carrier transport layer containing at least one compound of the above formula (I).

3. The electrophotographic photoreceptor according to Claim 2, wherein the carrier transport layer comprises at least one compound of the above formula (I) and a binder.

4. The electrophotographic photoreceptor according to Claim 1, wherein the photosensitive layer comprises photoconductive particles capable of generating electric charge carriers and at least one compound of the above formula (I), incorporated in a binder.

5. The electrophotographic photoreceptor according to Claim 1, wherein in the compound of the formula (I), each of Ar¹ and Ar² is a phenyl group which may have substituents and each of Ar³ and Ar⁴ is a phenylene or naphthylene group which may have substituents.

## Patentansprüche

1. Elektrophotographischer Photorezeptor, umfassend ein elektrisch leitendes Substrat und eine darauf gebildete photoempfindliche Schicht, wobei die photoempfindliche Schicht mindestens eine Verbindung der folgenden Formel (I) enthält: 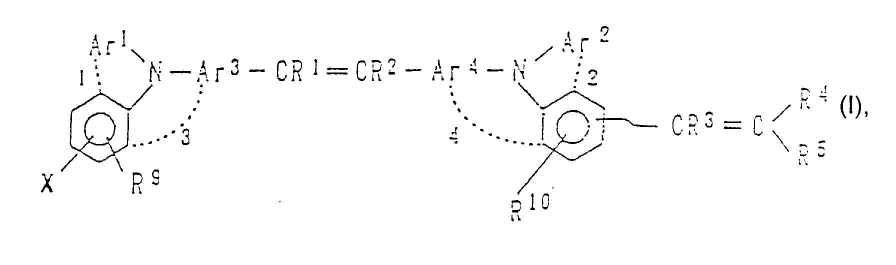 wobei X für ein Wasserstoffatom oder eine Gruppe -CR⁶=C(R⁷)R⁸ steht; jedes der Ar¹ und Ar², die gleich oder verschieden sein können für eine Alkylgruppe, die Substituenten aufweisen kann, eine Arylgruppe, die Substituenten aufweisen kann oder eine heterocyclische Gruppe, die Substituenten aufweisen kann, steht; jedes der Ar³ und Ar⁴, die gleich oder verschieden sein können, für eine Arylengruppe, die Substituenten aufweisen kann oder eine bivalente heterocyclische Gruppe, die Substituenten aufweisen kann, steht; jedes der R¹, R², R³, R⁴, R⁵, R⁶, R⁷ und R⁸, die gleich oder verschieden sein können, für ein Wasserstoffatom, eine Alkylgruppe, die Substituenten aufweisen kann, eine Arylgruppe, die Substituenten aufweisen kann oder heterocyclische Gruppe, die Substituenten aufweisen kann, steht (unter der Bedingung, dass, wenn jedes einzelne der R⁴ und R⁵ oder R⁷ und R⁸ für ein Wasserstoffatom oder eine Alkylgruppe steht, die anderen für eine Arylgruppe oder heterocyclische Gruppe stehen); jedes der R⁹ und R¹⁰, die gleich oder verschieden sein können, für ein Wasserstoffatom, ein Halogenatom, eine Alkyl-gruppe, die Substituenten aufweisen kann, eine Alkoxygruppe, die Substituenten aufweisen kann oder eine substituierte Aminogruppe steht; die gepunktete Linie 1 anzeigt, dass Ar¹, wie durch die gepunktete Linie gezeigt ist, an die aromatische Gruppe, die an das Stickstoffatom gebunden ist, gebunden sein kann, um eine Struktur der Formel (A-lll) oder (A-IV) zu bilden, die gepunktete Linie 2 anzeigt, dass Ar², wie durch die gepunktete Linie gezeigt, an die aromatische Gruppe, die an das Stickstoffatom gebunden ist, gebunden sein kann, um eine Struktur der Formel (A-V) oder (A-VI) zu bilden, die gepunktete Linie 3 anzeigt, dass Ar³, wie durch die gepunktete Linie gezeigt, an die aromatische Gruppe, die an das Stickstoffatom gebunden ist, gebunden sein kann, um eine Struktur der Formel (A-VII) oder (A-VIII) zu bilden und die gepunktete Linie 4 anzeigt, dass Ar⁴, wie durch die gepunktete Linie gezeigt, an die aromatische Gruppe, die an das Stickstoffatom gebunden ist, gebunden sein kann, um eine Struktur der Formel (A-IX) oder (A-X) zu bilden:

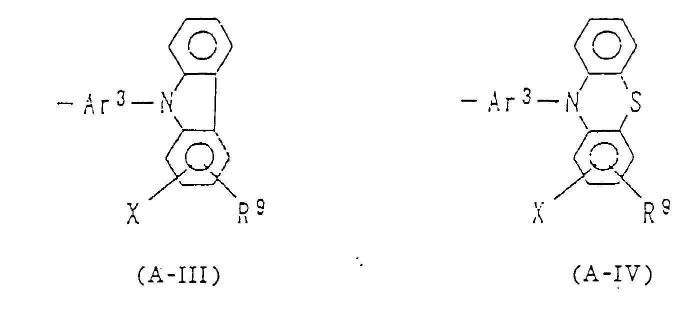

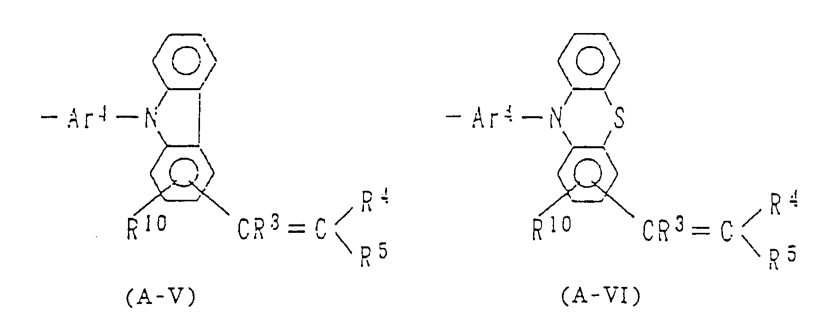

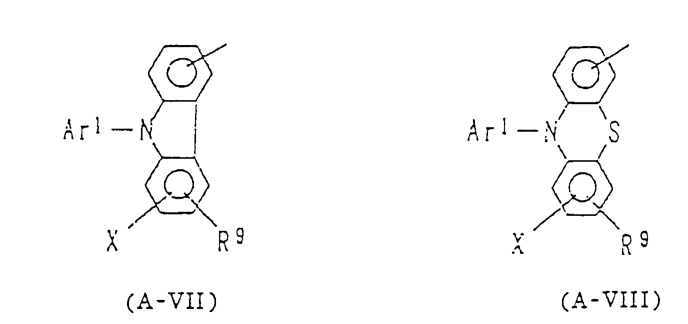

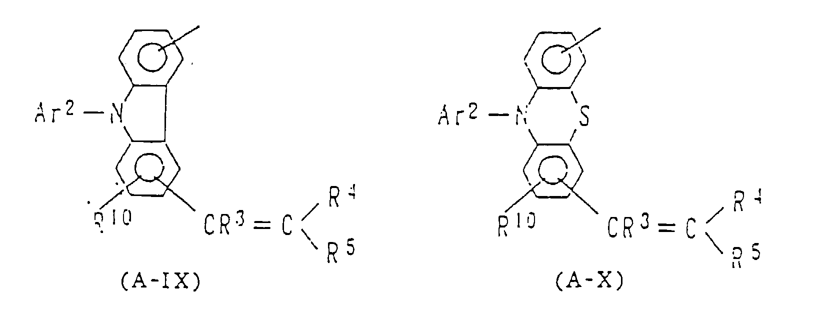

2. Elektrophotographischer Photorezeptor gemäß Anspruch 1, wobei die photoempfindliche Schicht eine Trägerentwicklungsschicht und eine Trägertransportschicht, die mindestens eine Verbindung der obigen Formel (I) enthält, umfasst.

3. Elektrophotographischer Photorezeptor gemäß Anspruch 2, wobei die Trägertransportschicht mindestens eine Verbindung der obigen Formel (I) und einen Binder umfasst.

4. Elektrophotographischer Photorezeptor gemäß Anspruch 1, wobei die photoempfindliche Schicht photoleitende Teilchen, die geeignet sind elektrische Ladungsträger zu erzeugen und mindestens eine Verbindung der obigen Formel (I), die einem Binder einverleibt ist, umfasst.

5. Elektrophotographischer Photorezeptor gemäß Anspruch 1, wobei in der Verbindung der Formel (I) jedes der Ar¹ und Ar² für eine Phenylgruppe steht, die Substituenten aufweisen können, und jedes der Ar³ und Ar⁴ für eine Phenylen- oder Naphthylengruppe steht, die Substituenten aufweisen können.

## Revendications

1. Photorécepteur électrophotographique comprenant un substrat électriquement conducteur et une couche photosensible formée sur celui-ci, dans lequel la dite couche photosensible contient au moins un composé de formule (I) suivante : 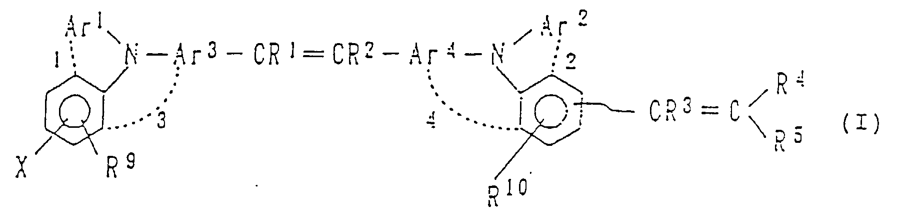 dans laquelle X est un atome d'hydrogène ou un groupe -CR⁶=C(R⁷) R⁸ ; chacun de Ar¹ et Ar² qui peuvent être identiques ou différents, est un groupe alkyle qui peut avoir des substituants, un groupe aryle qui peut avoir des substituants, ou un groupe hétérocyclique qui peut avoir des substituants ; chacun de Ar³ et Ar⁴ qui peuvent être identiques ou différents, est un groupe arylène qui peut avoir des substituants, ou un groupe bivalent hétérocyclique qui peut avoir des substituants ; chacun de R¹, R², R³, R⁴, R⁵, R⁶, R⁷ et R⁸ qui peuvent être identiques ou différents, est un atome d'hydrogène, un groupe alkyle qui peut avoir des substituants, un groupe aryle qui peut avoir des substituants, ou un groupe hétérocyclique qui peut avoir des substituants (sous réserve que si l'un de R⁴ et R⁵, ou de R⁷ et R⁸, est un atome d'hydrogène ou un groupe alkyle, l'autre est un groupe aryle ou un groupe hétérocyclique) ; chacun de R⁹ et R¹⁰ qui peuvent être identiques ou différents, est un atome d'hydrogène, un atome d'halogène, un groupe alkyle qui peut avoir des substituants, un groupe alkoxy qui peut avoir des substituants, ou un groupe amino substitué ; le trait en pointillé 1 indique que Ar¹ peut être lié, comme montré par le trait en pointillé, au groupe aromatique lié à l'atome d'azote pour former une structure de formule (A-III) ou (A- IV), le trait en pointillé 2 indique que Ar² peut être lié, comme montré par le trait en pointillé, au groupe aromatique lié à l'atome d'azote pour former une structure de formule (A-V) ou (A-VI), le trait en pointillé 3 indique que Ar³ peut être lié, comme montré par le trait en pointillé, au groupe aromatique lié à l'atome d'azote pour former une structure de formule (A-VII) ou (A-VIII), et le trait en pointillé 4 indique que Ar⁴ peut être lié, comme montré par le trait en pointillé, au groupe aromatique lié à l'atome d'azote pour former une structure de formule (A-IX) ou (A-X) :

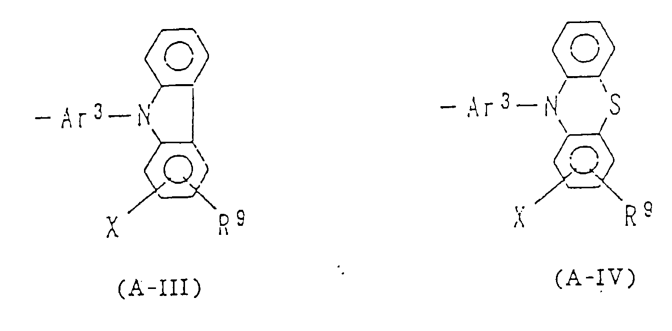

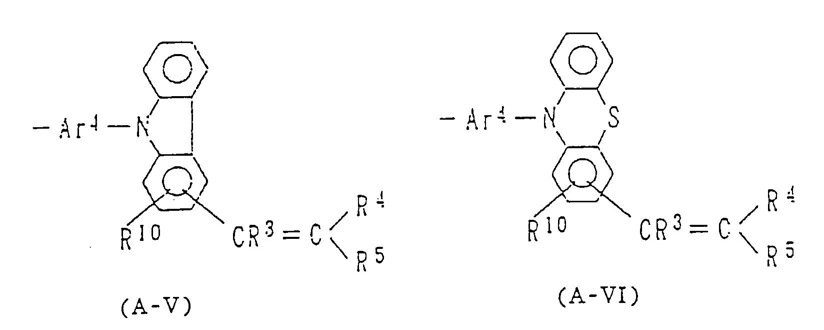

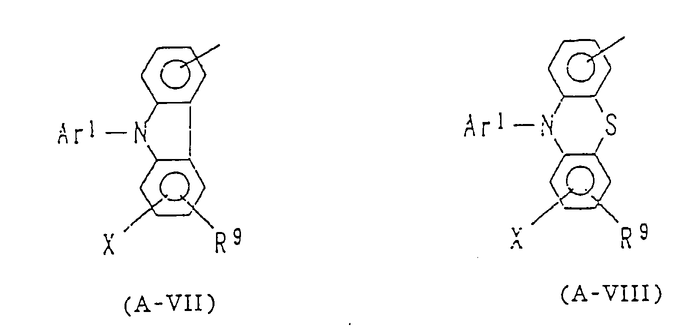

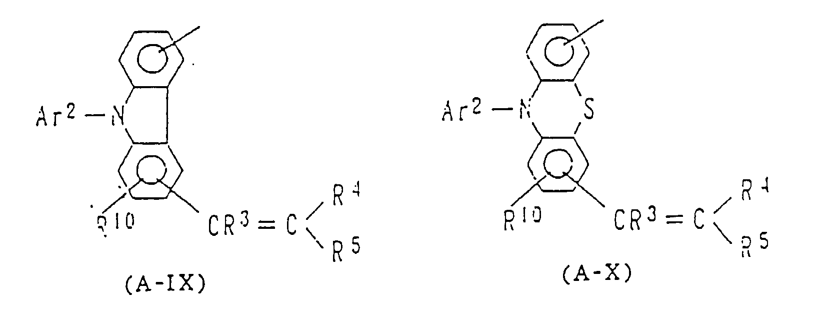

2. Photorécepteur électrophotographique selon la revendication 1, dans lequel la couche photosensible comprend une couche de génération de porteurs et une couche de transport de porteurs, contenant au moins un composé de formule (I) ci-dessus.

3. Photorécepteur électrophotographique selon la revendication 2, dans lequel la couche de transport de porteurs comprend au moins un composé de formule (I) ci-dessus et un liant.

4. Photorécepteur électrophotographique selon la revendication 1, dans lequel la couche photosensible comprend des particules photoconductrices capables de générer des porteurs de charges électriques et au moins un composé de formule (I) ci-dessus incorporés dans un liant.

5. Photorécepteur électrophotographique selon la revendication 1, dans lequel dans le composé de formule (I) chacun de Ar¹ et Ar² est un groupe phényle qui peut avoir des substituants et chacun de Ar³ et Ar⁴ est un groupe phénylène ou naphtylène qui peut avoir des substituants.
